(19) Europäisches Patentamt
European Patent Office
Office européen des brevets

(11) **EP 4 671 198 A1**

(12) **EUROPEAN PATENT APPLICATION**
published in accordance with Art. 153(4) EPC

(43) Date of publication:
**31.12.2025 Bulletin 2026/01**

(21) Application number: **24766536.7**

(22) Date of filing: **08.03.2024**

(51) International Patent Classification (IPC):
**C01B 3/56** (2006.01)     **C01B 3/50** (2006.01)

(52) Cooperative Patent Classification (CPC):
**C01B 3/50; C01B 3/56**

(86) International application number:
**PCT/CN2024/080824**

(87) International publication number:
**WO 2024/183822 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.03.2023   CN 202310226795
07.02.2024   CN 202420289865 U**

(71) Applicant: **Wuxi Longi Hydrogen Technology Co.,
Ltd.
Wuxi, Jiangsu 214135 (CN)**

(72) Inventors:
• **JIANG, Chao
  Wuxi, Jiangsu 214135 (CN)**
• **JIAO, Qingsheng
  Wuxi, Jiangsu 214135 (CN)**

• **YI, Meiqing
  Wuxi, Jiangsu 214135 (CN)**
• **TANG, Cong
  Wuxi, Jiangsu 214135 (CN)**
• **WANG, Hui
  Wuxi, Jiangsu 214135 (CN)**
• **ZHOU, Changlong
  Wuxi, Jiangsu 214135 (CN)**
• **SHAO, Zhangna
  Wuxi, Jiangsu 214135 (CN)**
• **ZHANG, Huihui
  Wuxi, Jiangsu 214135 (CN)**

(74) Representative: **Grünecker Patent- und
Rechtsanwälte
PartG mbB
Leopoldstraße 4
80802 München (DE)**

(54) **METHOD AND SYSTEM FOR PURIFYING AND DRYING HYDROGEN**

(57)    The present application relates to a method for purifying and drying a hydrogen stream. The method includes a drying phase, a regeneration phase and a supplemental drying phase that are sequentially performed. The supplemental drying phase includes: introducing a regenerated hydrogen stream into a supplemental working drying tower for a second adsorption processing to produce a dried regenerated hydrogen stream; directing the dried regenerated hydrogen stream through a draw-off pipeline for the dried regenerated hydrogen gas stream, and monitoring a draw-off flow rate of the dried regenerated hydrogen stream; and increasing an opening degree of a flow regulating valve for the regenerated hydrogen stream on the draw-off pipeline for the dried regenerated gas stream or reducing an opening degree of a flow regulating valve for the regenerated hydrogen stream on a draw-off pipeline for the product gas stream when the draw-off flow rate of the dried regenerated hydrogen stream is less than a threshold, so as to increase a flow rate of the regenerated hydrogen stream introduced into a regeneration drying tower. The present application can effectively adapt to load fluctuation of hydrogen output in renewable energy-based hydrogen production, ensuring the normal operation of a purification process system.

EP 4 671 198 A1

FIG. 1

## Description

The present application claims priorities to Chinese Patent Application No. 202310226795.7, field with the China National Intellectual Administration Property on March 9, 2023 and entitled "METHOD AND SYSTEM FOR PURIFYING AND DRYING HYDROGEN", and Chinese Patent Application No. 202420289865.3, filed with the China National Intellectual Administration Property on February 7, 2024 and entitled "SYSTEM FOR PURIFYING AND DRYING HYDROGEN AND HYDROGEN PRODUCTION SYSTEM", which are incorporated herein by reference in their entities.

## TECHNICAL FIELD

The present application relates to the field of purification of a crude hydrogen stream, and specifically, to a method for purifying and drying a hydrogen stream.

## BACKGROUND

With the large-scale application of hydrogen energy, particularly in renewable energy-based hydrogen production, hydrogen production devices operate in response to the fluctuation in electricity generation load. How to match the devices with such fluctuations to ensure the normal operation is therefore critical. Conventional systems for purifying and drying a hydrogen stream are generally designed according to rated working conditions, particularly with regeneration loops lacking dedicated regenerated gas stream output pipelines. Consequently, the regenerated hydrogen stream flow rate for regenerated towers is fixed (10-20% of a product hydrogen stream flow rate). When applied to scenarios with power fluctuations and variable gas output, regeneration loops of such conventional systems cannot adapt to gas processing capacity variations. During low-power operation or reduced feed gas intake of the hydrogen production system, the hydrogen output decreases, the flow rate of the regenerated hydrogen stream for the regenerated towers is insufficient, and the regeneration effect of drying towers is poor. As a result, when the regenerated towers are used for the drying towers again, product gas purity is decreased, or intermittent manual supplemental correction is required during the purification process, which is not suitable for fluctuating application scenarios of renewable energy-based hydrogen production.

## SUMMARY

An objective of the present application is to provide a method for purifying and drying a hydrogen stream, which can effectively adapt to load fluctuation of hydrogen output in renewable energy-based hydrogen production, ensuring the normal operation of a purification process system.

In order to achieve the above objective, a first aspect of the present application provides a method for purifying and drying a hydrogen stream, including a drying phase, a regeneration phase and a supplemental drying phase that are sequentially performed.

The drying phase includes: introducing a crude hydrogen stream produced by a hydrogen production system into a primary working drying tower for a first adsorption processing to produce a purified hydrogen stream.

The regeneration phase includes: dividing the purified hydrogen stream from the primary working drying tower into two portions; directing a first portion of the purified hydrogen stream as a product hydrogen stream through a draw-off pipeline for the product gas stream; and introducing a second portion of the purified hydrogen stream into a regeneration drying tower to regenerate an adsorbent thereof to produce a regenerated hydrogen stream and a regenerated adsorbent.

The supplemental drying phase includes: introducing the regenerated hydrogen stream into a supplemental working drying tower for a second adsorption processing to produce a dried regenerated hydrogen stream; directing the dried regenerated hydrogen stream through a draw-off pipeline for the dried regenerated hydrogen gas stream, and monitoring a draw-off flow rate of the dried regenerated hydrogen stream; and increasing an opening degree of a flow regulating valve for the regenerated hydrogen stream on the draw-off pipeline for the dried regenerated gas stream or reducing an opening degree of a flow regulating valve for the regenerated hydrogen stream on the draw-off pipeline for the product gas stream when the draw-off flow rate of the dried regenerated hydrogen stream is less than a threshold, so as to increase a flow rate of the regenerated hydrogen stream introduced into the regeneration drying tower.

The draw-off pipeline for the product gas stream and the draw-off pipeline for the dried regenerated gas stream converge to form a product header pipeline.

In an embodiment, the monitoring a draw-off flow rate of the dried regenerated hydrogen stream is performed by either:

manner 1: the draw-off pipeline for the regenerated gas stream is provided with a flow regulating valve for the regenerated hydrogen stream and a flow monitor, and the flow regulating valve for the regenerated hydrogen stream and the flow monitor are coupled with a controller via signal connection; or

manner 2: the draw-off pipeline for the regenerated gas stream is provided with a flow monitor, the draw-off pipeline for the product gas stream is provided with a flow regulating valve for the regenerated hydrogen stream, and the flow regulating valve for the regenerated hydrogen stream and the flow monitor are coupled with a controller via signal connection.

In an embodiment, a draw-off flow threshold of the dried regenerated hydrogen stream is $L_1$. The $L_1$ is set according to a rated flow rate of the purified hydrogen stream from the primary working drying tower during an operation of the hydrogen production system at a rated power. In the manner 1 or the manner 2, the flow regulating valve for the regenerated hydrogen stream is regulated to maintain the flow rate of the regenerated hydrogen stream introduced into the regeneration drying tower at 80-120% of the $L_1$.

In an embodiment, during the operation of the hydrogen production system at the rated power, a total flow rate of the purified hydrogen stream from the primary working drying tower is L, and the $L_1$ is set to 10-20% of the L.

In an embodiment, the draw-off pipeline for the product gas stream and/or the draw-off pipeline for the regenerated gas stream is provided with at least one pressure monitor.

The supplemental drying phase further includes:

acquiring a pressure value of a system for purifying and drying a hydrogen stream in real time, and determining an opening degree of the flow regulating valve for the regenerated hydrogen stream according to a pressure rated value of the system for purifying and drying a hydrogen stream and the pressure value of the system for purifying and drying a hydrogen stream acquired in real time, so as to enable the pressure value of the system for purifying and drying a hydrogen stream acquired in real time to reach the pressure rated value of the system for purifying and drying a hydrogen stream.

In an embodiment, the determining an opening degree of the flow regulating valve for the regenerated hydrogen stream according to a pressure rated value of the system for purifying and drying a hydrogen stream and the pressure value of the system for purifying and drying a hydrogen stream acquired in real time includes:

determining, by the flow regulating valve for the regenerated hydrogen stream, the opening degree of the flow regulating valve for the regenerated hydrogen stream based on a regenerated hydrogen stream flow rated value when an operating load of the system for purifying and drying a hydrogen stream is greater than a load threshold; and
determining, by the flow regulating valve for the regenerated hydrogen stream, the opening degree of the flow regulating valve for the regenerated hydrogen stream based on the pressure rated value of the system for purifying and drying a hydrogen stream when the operating load of the system for purifying and drying a hydrogen stream is less than or equal to the load threshold.

In an embodiment, the regeneration drying tower in the regeneration phase performs a regeneration processing under heating conditions.

In an embodiment, a heating manner in the regeneration phase includes: heating the second portion of the purified hydrogen stream inside the regeneration drying tower, or heating the second portion of the purified hydrogen stream outside the regeneration drying tower.

In an embodiment, the heating the second portion of the purified hydrogen stream outside the regeneration drying tower includes: first introducing the second portion of the purified hydrogen stream into an external heating apparatus for heating, and then introducing the heated second portion of the purified hydrogen stream into the regeneration drying tower.

In an embodiment, the external heating apparatus includes a first heating tower and a second heating tower, and the first heating tower and the second heating tower are used in series or used in parallel.

In an embodiment, a first drying tower, a second drying tower and a third drying tower are used. When one of the drying towers is used as the primary working drying tower, the other two drying towers are respectively used as the regeneration drying tower and the supplemental working drying tower. The method includes:

using the first drying tower as the primary working drying tower, using the second drying tower as the regeneration drying tower, and using the third drying tower as the supplemental working drying tower;
when a first preset switching condition is met, switching the second drying tower as the primary working drying tower, switching the third drying tower as the regeneration drying tower, and switching the first drying tower as the supplemental working drying tower;
when a second preset switching condition is met, switching the third drying tower as the primary working drying tower, switching the first drying tower as the regeneration drying tower, and switching the second drying tower as the supplemental working drying tower; and
when a third preset switching condition is met, switching the first drying tower as the primary working drying tower, switching the second drying tower as the regeneration drying tower, and switching the third drying tower as the supplemental working drying tower.

In an embodiment, a fourth drying tower is further included. When any of the three drying towers in operation is switched out, the fourth drying tower is switched in to replace the drying tower to be switched out.

In an embodiment, the first drying tower, the second drying tower, the third drying tower and the fourth drying tower are used. Moreover, in the regeneration phase, the second portion of the purified hydrogen stream from the primary working drying tower is heated inside the regeneration drying tower or heated outside the regeneration drying tower.

In an embodiment, the primary working drying tower is connected to a working cooling and separating unit for cooling and separating the stream before being introduced into the primary working drying tower. The regeneration drying tower is connected to a regeneration cooling and separating unit for cooling and separating the regenerated hydrogen stream. The supplemental working drying tower is connected to a supplemental working cooling and separating unit for cooling and separating the gas introduced into the supplemental working drying tower.

The method further includes:

heating a crude hydrogen stream by a pre-heater, then introducing the same into a deoxygenation apparatus for a deoxygenation processing to produce a deoxygenated electrolytic hydrogen stream, and introducing the deoxygenated electrolytic hydrogen stream into a first cooling and separating unit for cooling and separating to produce a first gas phase and a first liquid phase;
introducing the first gas phase into the working cooling and separating unit for cooling and separating to produce a working cooling gas phase and a working cooling liquid phase; introducing the working cooling gas phase into the primary working drying tower for processing to produce the purified hydrogen stream;
introducing the regenerated hydrogen stream from the regeneration drying tower into the regeneration cooling and separating unit for cooling and separating to produce a regenerated hydrogen separated gas phase and a regenerated hydrogen stream separated liquid phase;
introducing the regenerated hydrogen separated gas phase from the regeneration cooling and separating unit into the supplemental working cooling and separating unit for separating and cooling to produce a supplemental regenerated gas phase and a supplemental regenerated liquid phase; and introducing the supplemental regenerated gas phase into the supplemental working drying tower for processing to produce the dried regenerated hydrogen stream.

In an embodiment, the regeneration drying tower is connected to a regeneration cooling and separating unit for cooling and separating the regenerated hydrogen stream.

The method further includes:

heating a crude hydrogen stream by a pre-heater, then introducing the same into a deoxygenation apparatus for a deoxygenation processing to produce a deoxygenated electrolytic hydrogen stream, and introducing the deoxygenated electrolytic hydrogen stream into a first cooling and separating unit for cooling and separating to produce a first gas phase and a first liquid phase;
introducing the first gas phase into the primary working drying tower for processing to produce the purified hydrogen stream;

introducing the regenerated hydrogen stream from the regeneration drying tower into the regeneration cooling and separating unit for cooling and separating to produce a regenerated hydrogen separated gas phase and a regenerated hydrogen stream separated liquid phase; and
introducing the regenerated hydrogen separated gas phase into the supplemental working drying tower for processing to produce the dried regenerated hydrogen stream.

A second aspect of the present application provides a system for purifying and drying a hydrogen stream. The system includes a primary working drying tower, a regeneration drying tower and a supplemental working drying tower. Moreover, the system is configured to have a drying working condition, a regeneration working condition and a supplemental drying condition that are sequentially operated.

The drying working condition is configured to introduce a crude hydrogen stream produced by a hydrogen production system into the primary working drying tower for an adsorption processing to produce a purified hydrogen stream.

The regeneration working condition is configured to divide the purified hydrogen stream from the primary working drying tower into two portions; direct a first portion of the purified hydrogen stream product as a product hydrogen stream through a draw-off pipeline for the product gas stream; and introduce a second portion of the purified hydrogen stream into the regeneration drying tower to regenerate an adsorbent thereof to produce a regenerated hydrogen stream and a regenerated adsorbent.

The supplemental drying condition is configured to introduce the regenerated hydrogen stream into the supplemental working drying tower for a second adsorption processing to produce a dried regenerated hydrogen stream; direct the dried regenerated hydrogen stream through a draw-off pipeline for the dried regenerated hydrogen gas stream, and monitor a draw-off flow rate of the dried regenerated hydrogen stream; and increase an opening degree of a flow regulating valve for the regenerated hydrogen stream on the draw-off pipeline for the dried regenerated gas stream or reduce an opening degree of a flow regulating valve for the regenerated hydrogen stream on the draw-off pipeline for the product gas stream when the draw-off flow rate of the dried regenerated hydrogen stream is less than a threshold, so as to increase a flow rate of the regenerated hydrogen stream introduced into the regeneration drying tower.

The draw-off pipeline for the product gas stream and the draw-off pipeline for the dried regenerated gas stream converge to form a product header pipeline.

A second aspect of the present application further provides another system for purifying and drying a hydrogen stream, where the system includes a first drying tower, a second drying tower and a third drying tower. The system configures the first drying tower, the second drying tower and the third drying tower to be sequentially recycled as a primary working drying tower, a regeneration drying tower and a supplemental working drying tower in a drying working condition, a regeneration working condition and a supplemental drying condition.

The primary working drying tower is configured to perform an adsorption processing on a crude hydrogen stream produced by a hydrogen production system to produce a purified hydrogen stream.

The system includes a draw-off pipeline for the product gas stream, configured to direct a first portion of the hydrogen in the purified hydrogen stream from the primary working drying tower.

The regeneration drying tower is configured to introduce a second portion of the hydrogen in the purified hydrogen stream into the regeneration drying tower to regenerate an adsorbent thereof to produce a regenerated hydrogen stream and a regenerated adsorbent.

The supplemental working drying tower is configured to perform a second adsorption processing on the regenerated hydrogen stream to produce a dried regenerated hydrogen stream.

The system includes a draw-off pipeline for the dried regenerated gas stream, configured to direct the regenerated hydrogen stream from the supplemental working drying tower.

The system includes a product header pipeline, formed by convergence of the draw-off pipeline for the product gas stream and the draw-off pipeline for the dried regenerated gas stream.

The system includes a flow regulating valve for the regenerated hydrogen stream and a flow monitor. The flow regulating valve for the regenerated hydrogen stream and the flow monitor are coupled with a controller via signal connection. The flow regulating valve for the regenerated hydrogen stream and the flow monitor are arranged on the draw-off pipeline for the dried regenerated gas stream. Alternatively,
the flow monitor is arranged on the draw-off pipeline for the dried regenerated gas stream, and the flow regulating valve for the regenerated hydrogen stream is arranged on the draw-off pipeline for the product gas stream.

In an embodiment, the system includes a flow regulating valve for the regenerated hydrogen stream and a flow monitor. The flow regulating valve for the regenerated hydrogen stream and the flow monitor are coupled with a controller via signal connection. The flow regulating valve for the regenerated hydrogen stream and the flow monitor are arranged on the draw-off pipeline for the dried regenerated gas stream. Alternatively, the flow monitor is arranged on the draw-off pipeline for the dried regenerated gas stream, and the flow regulating valve for the regenerated hydrogen stream is arranged on the draw-off pipeline for the product gas stream.

In an embodiment, the draw-off pipeline for the product gas stream is provided with a pressure monitor and a regulating valve for the product hydrogen stream. The pressure monitor and the regulating valve for the product hydrogen stream are coupled with a controller via signal connection. An opening degree of the regulating valve for the product hydrogen stream is configured to be set according to a rated pressure of the system. In a further embodiment, when the flow regulating valve for the regenerated hydrogen stream is arranged on the draw-off pipeline for the product gas stream, the flow regulating valve for the regenerated hydrogen stream is arranged on an upstream side of the regulating valve for the product hydrogen stream to enable the product hydrogen stream from the primary working drying tower to flow out sequentially through the flow regulating valve for the regenerated hydrogen stream, the pressure monitor and the regulating valve for the product hydrogen stream.

In an embodiment, the regulating valve for the product hydrogen stream is selected from one of a film pneumatic regulating valve or a self-operated pressure regulating valve.

In an embodiment, the system for purifying and drying a hydrogen stream further includes:
a regenerated gas stream introduction pipeline, configured to introduce the second portion of the hydrogen in the purified hydrogen stream into the regeneration drying tower.

The draw-off pipeline for the product gas stream and/or the draw-off pipeline for the regenerated gas stream is provided with at least one pressure monitor.

One of the regenerated gas stream introduction pipeline, the draw-off pipeline for the dried regenerated gas stream and the draw-off pipeline for the product gas stream is respectively provided with a flow regulating valve for the regenerated hydrogen stream and a flow monitor. The flow regulating valve for the regenerated hydrogen stream is electrically connected to the flow monitor. The flow regulating valve for the regenerated hydrogen stream is electrically connected to the at least one pressure monitor.

In an embodiment, the flow regulating valve for the regenerated hydrogen stream and the flow monitor are arranged on the draw-off pipeline for the dried regenerated gas stream.

In an embodiment, the pressure monitor is arranged on the draw-off pipeline for the dried regenerated gas stream.

In an embodiment, the flow regulating valve for the regenerated hydrogen stream and the flow monitor are both arranged on the draw-off pipeline for the dried regenerated gas stream. The pressure monitor is arranged on the draw-off pipeline for the product gas stream. The flow regulating valve for the regenerated hydrogen stream is electrically connected to the flow monitor and the pressure monitor respectively.

In an embodiment, the system further includes an external heating apparatus, configured to heat the regenerated hydrogen stream before being introduced into the regeneration drying tower.

In an embodiment, the external heating apparatus includes a first heating tower and a second heating tower, and the first heating tower and the second heating tower are used in series or used in parallel.

In an embodiment, the system includes a first drying tower, a second drying tower and a third drying tower. The system configures the first drying tower, the second drying tower and the third drying tower to be sequentially recycled as a primary working drying tower, a regeneration drying tower and a supplemental working drying tower in a drying working condition, a regeneration working condition and a supplemental drying condition.

In an embodiment, the system further includes a fourth drying tower. The system configures the fourth drying tower such that: when any of the three drying towers in operation is switched out, the fourth drying tower is switched in to replace the drying tower to be switched out.

In an embodiment, the system further includes a deoxygenation apparatus, and the deoxygenation apparatus is configured to perform a deoxygenation processing on a crude hydrogen stream to produce a deoxygenated crude hydrogen stream. A deoxygenated crude hydrogen stream outlet of the deoxygenation apparatus communicates with an inlet of the primary working drying tower.

In an embodiment, the system further includes a first cooling and separating unit. The first cooling and separating unit is configured to perform a first cooling processing and a first separation processing on the deoxygenated crude hydrogen stream from the deoxygenation apparatus to produce a first gas phase and a first liquid phase. A first gas phase outlet of the first cooling and separating unit communicates with the inlet of the primary working drying tower.

In an embodiment, the system further includes a working cooling and separating unit, a regeneration cooling and separating unit and a supplemental drying cooling and separating unit. The working cooling and separating unit is configured to cool and separate the stream before being introduced into the primary working drying tower. The regeneration cooling and separating unit is configured to cool and separate the regenerated hydrogen stream produced from the regeneration drying tower. The supplemental working cooling and separating unit is configured to cool and separate the stream before being introduced into the supplemental working drying tower.

Alternatively, the system further includes a regeneration cooling and separating unit, and the regeneration cooling and separating unit is configured to cool and separate the regenerated hydrogen stream produced from the regeneration drying tower.

According to the above technical solutions, the present application provides a method for purifying and drying a hydrogen stream. In the present application, the draw-off flow rate of the dried regenerated hydrogen stream is specifically monitored, and the flow rate of the regenerated hydrogen stream introduced into the regeneration drying tower is increased by increasing the opening degree of the flow regulating valve for the regenerated hydrogen stream on the draw-off pipeline for the dried regenerated gas stream or reducing the opening degree of the flow regulating valve for the regenerated hydrogen stream on the draw-off pipeline for the product gas stream. When an operating power of the hydrogen production system is relatively low, the gas flow rate of the regenerated gas stream pipeline is preferentially ensured, the regeneration effect of the drying tower is ensured, the normal operation of the entire purifying and drying system is ensured, and product gas with a qualified gas dew point is output. The present application can effectively adapt to power fluctuation of hydrogen output in renewable energy-based hydrogen production, ensuring the normal operation of a purification process system.

A third aspect of the present application provides a system for purifying and drying a hydrogen stream, including: at least two drying towers, where the two drying towers include a first drying tower and a second drying tower. The system for purifying and drying a hydrogen stream is configured to operate periodically. The system for purifying and drying a hydrogen stream includes a first operating phase and a second operating phase in each operating cycle. The first drying tower and the second drying tower are sequentially and correspondingly used as a primary working drying tower and a regeneration drying tower in turn in each operating phase.

The primary working drying tower is configured to perform an adsorption processing on a crude hydrogen stream produced by a hydrogen production system to produce a purified hydrogen stream.

The system includes a draw-off pipeline for the product gas stream, configured to direct a first portion of the hydrogen in the purified hydrogen stream from the primary working drying tower.

The system includes a regenerated gas stream introduction pipeline, configured to introduce a second portion of the hydrogen in the purified hydrogen stream into the regeneration drying tower. The regeneration drying tower is configured to use the second portion of the hydrogen in the purified hydrogen stream to regenerate an adsorbent of the regeneration drying tower to produce a regenerated hydrogen stream.

The system includes a draw-off pipeline for the dried regenerated gas stream, configured to direct the regenerated hydrogen stream from the regeneration drying tower.

The draw-off pipeline for the product gas stream and/or the draw-off pipeline for the regenerated gas stream is provided with at least one pressure monitor.

One of the regenerated gas stream introduction pipeline, the draw-off pipeline for the dried regenerated gas stream and the draw-off pipeline for the product gas stream is respectively provided with a flow regulating valve for the regenerated hydrogen stream and a flow monitor. The flow regulating valve for the regenerated hydrogen stream is electrically connected to the flow monitor. The flow regulating valve for the regenerated hydrogen stream is electrically connected to the at least one pressure monitor.

According to the system for purifying and drying a hydrogen stream provided in the present application, a manner of controlling a purification pressure and a flow can be changed according to a change of an operating load of the system, so as to achieve stable operation of the system for purifying and drying a hydrogen stream at a low load.

In addition, the system for purifying and drying a hydrogen stream in the present application can further have the following additional technical features.

In an embodiment, the flow regulating valve for the regenerated hydrogen stream is arranged on the regenerated gas stream introduction pipeline and/or the draw-off pipeline for the dried regenerated gas stream, and the flow monitor is arranged on the regenerated gas stream introduction pipeline and/or the draw-off pipeline for the dried regenerated gas stream.

In an embodiment, the flow regulating valve for the regenerated hydrogen stream is arranged on the regenerated gas stream introduction pipeline and/or the draw-off pipeline for the dried regenerated gas stream, and the flow monitor is arranged on the draw-off pipeline for the product gas stream.

In an embodiment, the draw-off pipeline for the product gas stream is provided with a product regulating valve, and the pressure monitor is electrically connected to the product regulating valve.

In an embodiment, the flow monitor is electrically connected to the product regulating valve.

In an embodiment, the flow regulating valve for the regenerated hydrogen stream is arranged on the regenerated gas stream introduction pipeline and/or the draw-off pipeline for the dried regenerated gas stream, and the flow monitor is arranged on the regenerated gas stream introduction pipeline and/or the draw-off pipeline for the dried regenerated gas stream. The pressure monitor is arranged on the draw-off pipeline for the product gas stream.

In an embodiment, the system for purifying and drying a hydrogen stream further includes a third drying tower, and the system for purifying and drying a hydrogen stream includes a first operating phase, a second operating phase and a third operating phase in each operating cycle. The third drying tower is used as the supplemental working drying tower, and the first drying tower, the second drying tower and the third drying tower are sequentially and correspondingly used as the primary working drying tower, the supplemental working drying tower and the regeneration drying tower in turn in each operating phase. The supplemental working drying tower is configured to perform an adsorption processing on the regenerated hydrogen stream produced from the regeneration drying tower to produce a dried regenerated hydrogen stream.

In an embodiment, the draw-off pipeline for the dried regenerated gas stream includes a regenerated gas stream draw-off branch, configured to direct the dried regenerated hydrogen stream from the supplemental working drying tower.

In an embodiment, the flow regulating valve for the regenerated hydrogen stream and the flow monitor are arranged on the regenerated gas stream draw-off branch.

In an embodiment, the pressure monitor is arranged on the regenerated gas stream draw-off branch.

In an embodiment, the flow regulating valve for the regenerated hydrogen stream and the flow monitor are both arranged on the regenerated gas stream draw-off branch, the pressure monitor is arranged on the draw-off pipeline for the product gas stream, and the flow regulating valve for the regenerated hydrogen stream is electrically connected to the flow monitor and the pressure monitor respectively.

In an embodiment, the draw-off pipeline for the dried regenerated gas stream and/or the draw-off pipeline for the product gas stream are provided with cut-off valves.

In an embodiment, the flow regulating valve for the regenerated hydrogen stream is a ball valve, and the cut-off valve is a stop valve.

A fourth aspect of the present application provides a hydrogen production system, including the system for purifying and drying a hydrogen stream according to any embodiment of the present application.

Other features and advantages of the present application will be described in detail in the following specific embodiments.

## BRIEF DESCRIPTION OF THE DRAWINGS

The accompanying drawings are intended to provide a further understanding of the present application and constitute a part of this specification. The accompanying drawings and the specific embodiments below are used together for explaining the present application rather than constituting a limitation to the present application. In the accompanying drawings:

FIG. 1 is an exemplary flowchart of a method for purifying and drying a hydrogen stream provided in the present application;

FIG. 2a is an exemplary flowchart of a draw-off pipeline for the product gas stream and a draw-off pipeline for the dried regenerated gas stream in a method for purifying and drying a hydrogen stream provided in the present application;

FIG. 2b is an exemplary flowchart of a draw-off pipeline for the product gas stream and a draw-off pipeline for the dried regenerated gas stream in a method for purifying and drying a hydrogen stream provided in the present application;

FIG. 2c is an exemplary flowchart of a draw-off pipeline for the product gas stream and a draw-off pipeline for the dried regenerated gas stream in a method for purifying and drying a hydrogen stream provided in the present application;

FIG. 2d is an exemplary flowchart of a draw-off pipeline for the product gas stream and a draw-off pipeline for the dried regenerated gas stream in a method for purifying and drying a hydrogen stream provided in the present application;

FIG. 3 is an exemplary flowchart of a method for purifying and drying a hydrogen stream provided in the present application;

FIG. 4 is an exemplary flowchart of a heating manner of regenerated hydrogen stream outside towers (heating towers connected in series) in the present application;

FIG. 5a is an exemplary flowchart of a heating manner of regenerated hydrogen stream outside towers (heating towers standby for each other) in the present application;

FIG. 5b is an exemplary flowchart of a heating manner of regenerated hydrogen stream outside towers (heating towers standby for each other) in the present application;

FIG. 6 is an exemplary flowchart of a method for purifying and drying a hydrogen stream (heating inside drying towers) provided in the present application;

FIG. 7 is an exemplary flowchart of a method for purifying and drying a hydrogen stream (heating outside drying towers) provided in the present application;

FIG. 8 is an exemplary flowchart of a method for purifying and drying a hydrogen stream (heating inside drying towers, and standby towers) provided in the present application;

FIG. 9 is an exemplary flowchart of a method for purifying and drying a hydrogen stream (heating outside drying towers, and standby towers) provided in the present application;

FIG. 10a is an exemplary flowchart of a method for purifying and drying a hydrogen stream (heating inside drying towers) provided in the present application before switching to standby towers;

FIG. 10b is an exemplary flowchart of a method for purifying and drying a hydrogen stream (heating inside drying towers) provided in the present application after switching to standby towers;

FIG. 11a is an exemplary flowchart of a method for purifying and drying a hydrogen stream (heating outside drying towers) provided in the present application before switching to standby towers;

FIG. 11b is an exemplary flowchart of a method for purifying and drying a hydrogen stream (heating outside drying towers) provided in the present application after switching to standby towers;

FIG. 12 is a diagram showing a working state of a system for purifying and drying a hydrogen stream provided in an embodiment of the present application in a first operating phase;

FIG. 13 is a diagram showing a working state of a system for purifying and drying a hydrogen stream provided in an embodiment of the present application in a second operating phase;

FIG. 14 is a diagram showing a working state of a system for purifying and drying a hydrogen stream provided in an embodiment of the present application in a third operating phase;

FIG. 15 is another exemplary structural diagram of pressure regulation and control of a regulating valve for the regenerated hydrogen stream provided in an embodiment of the present application; and

FIG. 16 is a control logic diagram of a system for purifying and drying a hydrogen stream provided in an embodiment of the present application.

DETAILED DESCRIPTION

Specific embodiments of the present application are described in detail below. It should be understood that the specific embodiments described herein are merely used to illustrate and explain the present application, but are not intended to limit the present application.

In the present application, unless otherwise stated, the terms "first", "second", "third", and the like are used merely for the purpose of description, and shall not be construed as indicating or implying relative importance or implying the quantity of indicated technical features.

A first aspect of the present application provides a method for purifying and drying a hydrogen stream, including a drying phase, a regeneration phase and a supplemental drying phase that are sequentially performed.

The drying phase includes: a crude hydrogen stream produced by a hydrogen production system is introduced into a primary working drying tower for a first adsorption processing to produce a purified hydrogen stream.

The regeneration phase includes: the purified hydrogen stream from the primary working drying tower is divided into two portions; a first portion of the purified hydrogen stream is directed as a product hydrogen stream through a draw-off pipeline for the product gas stream; and a second portion of the purified hydrogen stream is introduced into a regeneration drying tower to regenerate an adsorbent thereof to produce a regenerated hydrogen stream and a regenerated adsorbent.

The supplemental drying phase includes: the regenerated hydrogen stream is introduced into a supplemental working drying tower for a second adsorption processing to produce a dried regenerated hydrogen stream; the dried regenerated hydrogen stream is directed through a draw-off pipeline for the dried regenerated hydrogen gas stream, and a draw-off flow rate of the dried regenerated hydrogen stream is monitored; and an opening degree of a flow regulating valve for the regenerated hydrogen stream on the draw-off pipeline for the dried regenerated gas stream is increased or an opening degree of a flow regulating valve for the regenerated hydrogen stream on the draw-off pipeline for the product gas stream is reduced when the draw-off flow rate of the dried regenerated hydrogen stream is less than a threshold, so as to increase a flow rate of the regenerated hydrogen stream introduced into the regeneration drying tower.

The draw-off pipeline for the product gas stream and the draw-off pipeline for the dried regenerated gas stream converge to form a product header pipeline.

The present application provides a method for purifying and drying a hydrogen stream. In the present application, the draw-off flow rate of the dried regenerated hydrogen stream is specifically monitored, and the flow rate of the regenerated hydrogen stream introduced into the regeneration drying tower is increased by increasing the opening degree of the flow regulating valve for the regenerated hydrogen stream on the draw-off pipeline for the dried regenerated gas stream or reducing the opening degree of the flow regulating valve for the regenerated hydrogen stream on the draw-off pipeline for the product gas stream. When an operating power of the hydrogen production system is relatively low, the gas flow rate of the regenerated gas stream pipeline is preferentially ensured, the regeneration effect of the drying tower is ensured, the normal operation of the entire purifying and drying system is ensured, and product gas with a qualified gas dew point is output. The present application can effectively adapt to power fluctuation of hydrogen output in renewable energy-based hydrogen production, ensuring the normal operation of a purification process system.

In the present application, "the drying phase, the regeneration phase and the supplemental drying phase that are sequentially performed" means that a process is performed according to a sequence of the drying phase, the regeneration phase and the supplemental drying phase that are sequentially performed, and the drying towers are switched and respectively used as the primary working drying tower, the regeneration drying tower and the supplemental working drying tower to repeatedly operate the process.

In the present application, the draw-off pipeline for the product gas stream is configured to direct the first portion of the purified hydrogen stream from the primary working drying tower as a product hydrogen stream, and is a primary line for directing the purified hydrogen stream. The draw-off pipeline for the dried regenerated gas stream is configured to direct the dried regenerated hydrogen stream from the supplemental working drying tower, and is a primary line for directing the regenerated gas stream, and the dried regenerated hydrogen stream can also be used as a product hydrogen stream. Therefore, the draw-off pipeline for the product gas stream and the draw-off pipeline for the dried regenerated gas stream converge to form a product hydrogen stream main draw-off pipeline, so that the first portion of the purified hydrogen stream having qualified quality and the dried regenerated hydrogen stream having qualified quality converge to be directed as a product hydrogen stream for subsequent processes. For example, the product hydrogen stream is introduced into a hydrogen storage tank for storage.

When the draw-off flow rate of the dried regenerated hydrogen stream is monitored, any type of flow monitors known in the art, such as a flow transmitter, can be used.

In an embodiment, the draw-off pipeline for the product gas stream is specifically a product gas stream draw-off primary line, the draw-off pipeline for the dried regenerated gas stream is specifically a regenerated gas stream draw-off primary line, and the product header pipeline is specifically a product gas main draw-off primary line.

In the present application, "a crude hydrogen stream" can be sourced from conventional apparatuses in the art, such as hydrogen produced by a water electrolysis system, and impurities of the crude hydrogen stream include oxygen, water, a trace amount of nitrogen, and the like.

In the present application, the quality of the final product hydrogen stream can be regulated through a specific process design.

In a specific embodiment, in the product hydrogen stream produced by the process provided in the present application, a volume content of hydrogen is 99.999% or above, and a dew point of hydrogen is -70°C or below (representing a water content of hydrogen).

In a specific embodiment, an adsorbent used in each of the drying towers in the present application is a molecular sieve, and the molecular sieve can be of a commonly selected type in the art. In the present application, the primary working drying tower is filled with a first molecular sieve, the regeneration drying tower is filled with a second molecular sieve, and the supplemental working drying tower is filled with a third molecular sieve. The first molecular sieve, the second molecular sieve and the third molecular sieve can effectively adsorb water, and the types of the first molecular sieve, the second molecular sieve and the third molecular sieve can be the same or different. In an embodiment, the three drying towers are filled with the same molecular sieve as the adsorbent.

In the present application, an introduction manner of a crude hydrogen stream, such as an introduction flow, can be regulated according to actual processing situations.

In an embodiment, the draw-off of the dried regenerated hydrogen stream is performed by either of the following manners.

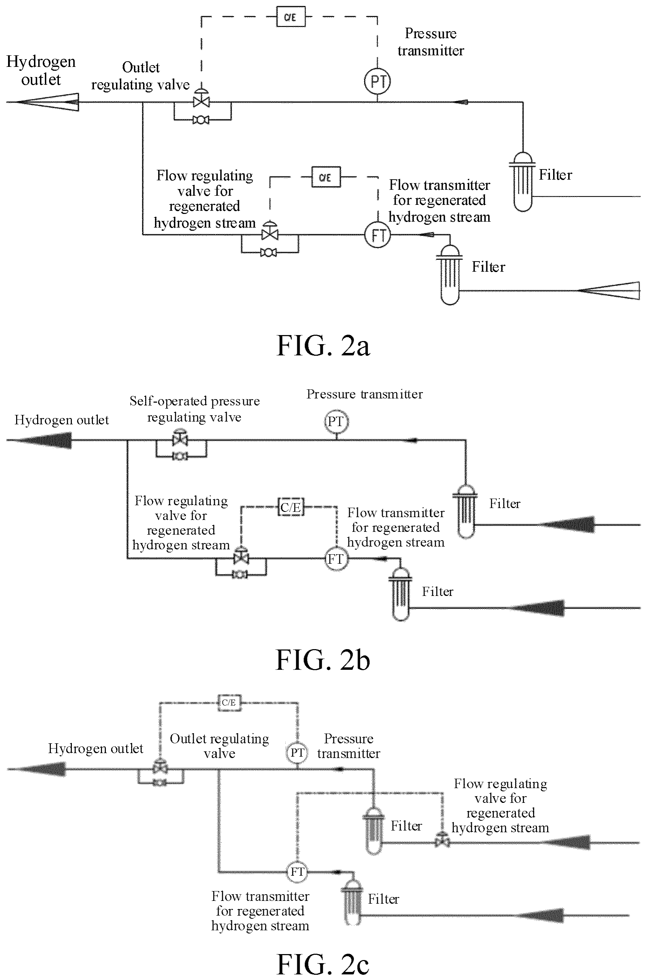

Manner 1: The draw-off pipeline for the regenerated gas stream is provided with a flow regulating valve for the regenerated hydrogen stream and a flow monitor, and the flow regulating valve for the regenerated hydrogen stream and the flow monitor are coupled with a controller via signal connection (as shown in FIG. 2a and FIG. 2b): the dried regenerated hydrogen stream is directed through the draw-off pipeline for the dried regenerated gas stream. When a flow rate of the dried regenerated hydrogen stream, monitored by the flow monitor, is less than a threshold, an opening degree of the flow regulating valve for the regenerated hydrogen stream is increased, so as to increase a flow rate of the regenerated hydrogen stream introduced into the regeneration drying tower.

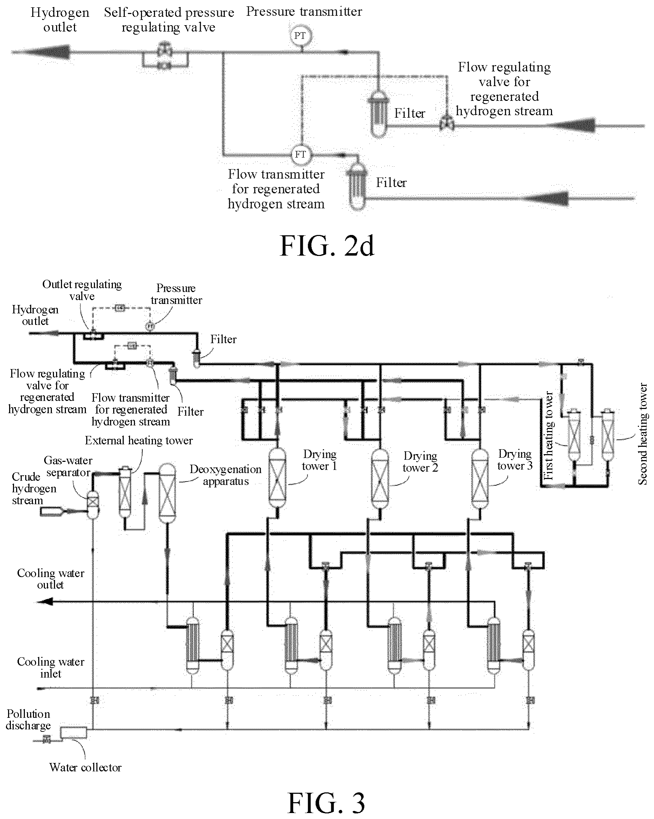

Manner 2: The draw-off pipeline for the regenerated gas stream is provided with a flow monitor, the draw-off pipeline for the product gas stream is provided with a flow regulating valve for the regenerated hydrogen stream, and the flow regulating valve for the regenerated hydrogen stream and the flow monitor are coupled with a controller via signal connection (as shown in FIG. 2c and FIG. 2d): the dried regenerated hydrogen stream is directed through the draw-off pipeline for the dried regenerated gas stream. When a flow rate of the dried regenerated hydrogen stream, monitored by the flow monitor, is less than a threshold, an opening degree of the flow regulating valve for the regenerated hydrogen stream is reduced, so as to increase a flow rate of the regenerated hydrogen stream introduced into the regeneration drying tower.

In a specific embodiment, the above flow regulating valve for the regenerated hydrogen stream can be electrically connected to the flow monitor through the controller. The flow information of the regenerated hydrogen stream produced by the flow monitor is transmitted to the controller through a wire. The controller performs comparative analysis according to the flow information of the regenerated hydrogen stream produced by the flow monitor and the regenerated hydrogen stream flow rated value preset inside. The controller transmits the control information to a locator of the flow regulating valve for the regenerated hydrogen stream through a wire according to an analysis result, so that the flow regulating valve for the regenerated hydrogen stream performs a corresponding operation, and an opening degree of the flow regulating valve for the regenerated hydrogen stream is determined.

In a specific embodiment, the draw-off pipeline for the product gas stream is provided with a pressure monitor and an outlet regulating valve for the product hydrogen stream, and the pressure monitor and the outlet regulating valve for the product hydrogen stream are coupled with a controller via signal connection. An opening degree of the outlet regulating valve for the product hydrogen stream is configured to be set according to a rated pressure of the system.

When a draw-off pressure of the product hydrogen stream in the draw-off pipeline for the product gas stream is monitored, any type of pressure monitors known in the art, such as a pressure transmitter, can be used.

In the manner 1, in the present application, a flow meter and a regulating valve that are independent of each other are arranged on the draw-off pipeline for the dried regenerated gas stream, and are designed in parallel with a pressure regulating pipeline of the draw-off pipeline for the product gas stream, so as to flexibly regulate the flow rate of the hydrogen regenerated from a regeneration tower, where the opening degree of the outlet regulating valve for the product hydrogen stream is set according to the rated pressure of the system. When the hydrogen production system operates at a low power, it is monitored that the flow rate of the regenerated gas stream of the flow monitor is reduced. By enlarging the flow regulating valve for the regenerated hydrogen stream of the regenerated gas stream output pipeline, the gas stream can be more easily directed to the regeneration pipeline to enter the regeneration drying tower, so that the flow monitored by the flow monitor on the regenerated gas stream output pipeline is increased to a preset value. In the manner 2, the flow regulating valve for the regenerated hydrogen stream can be arranged on a header gas draw-off pipeline (draw-off pipeline for the product gas stream). Due to the fact that the regenerated gas stream pipeline needs to pass through the regeneration tower and the supplemental working drying tower, the pipeline route is relatively long, and the relative gas resistance is relatively high. Reducing the flow rate of the header gas pipeline (draw-off pipeline for the product gas stream) can also increase the flow rate of the regenerated gas stream pipeline.

In a specific embodiment, the outlet regulating valve for the product hydrogen stream is selected from one of a film pneumatic regulating valve (as shown in FIG. 2a and FIG. 2c), or a self-operated pressure regulating valve (as shown in FIG. 2b and FIG. 2d).

In a specific embodiment, a draw-off flow threshold of the dried regenerated hydrogen stream is $L_1$, and the $L_1$ is set according to a rated flow rate of the purified hydrogen stream from the primary working drying tower during an operation of the hydrogen production system at a rated power. In the manner 1 or the manner 2, the flow regulating valve for the regenerated hydrogen stream is regulated to maintain the flow rate of the regenerated hydrogen stream introduced into the regeneration drying tower at 80-120% of the $L_1$. Even if the flow rate of the crude hydrogen stream introduced into the system is insufficient, the present application can also ensure the flow rate of the regenerated hydrogen stream introduced into the regeneration drying tower to ensure the regeneration effect of the drying tower.

In a specific embodiment, during the operation of the hydrogen production system at the rated power, a total flow rate of the purified hydrogen stream from the primary working drying tower is L, and the $L_1$ is set to 10-20% of the L.

In the present application, the primary working drying tower, the regeneration drying tower and the supplemental working drying tower are all commonly used apparatuses in the art.

In an embodiment, the flow direction of the second portion of the purified hydrogen stream introduced into the regeneration drying tower in the regeneration phase is opposite to the flow direction of the crude hydrogen stream introduced into the primary working drying tower in the drying phase, so as to enable the second portion of the purified hydrogen stream to reversely blow the adsorbent. For example, during the normal adsorption of the drying tower, a gas inlet is formed at an upper part of the drying tower, a gas outlet is formed at a lower part of the drying tower, and the inside of the drying tower is filled with an adsorbent, so that the crude hydrogen stream enters the drying tower from the gas inlet and flows through the adsorbent from top to bottom for an adsorption processing, and the processed gas flows out through the gas outlet at the lower part. During the regeneration working process of the drying tower, the regenerated hydrogen stream enters from the gas outlet at the lower part and flows through the adsorbent from bottom to top so as to reversely blow the adsorbent, and then the regenerated hydrogen stream flows out through the gas inlet at the upper part.

In the present application, the adsorbent filled in the drying tower can be one or more of commonly selected adsorbents in the art, such as molecular sieves, silica gel and activated alumina.

In an embodiment, the regeneration drying tower in the regeneration phase performs a regeneration processing under heating conditions, where the heating temperature is a temperature required for conventional regeneration in the art.

In the present application, a heating manner in the regeneration phase is performed by either of the following: the second portion of the purified hydrogen stream is heated inside the regeneration drying tower or outside the regeneration drying tower.

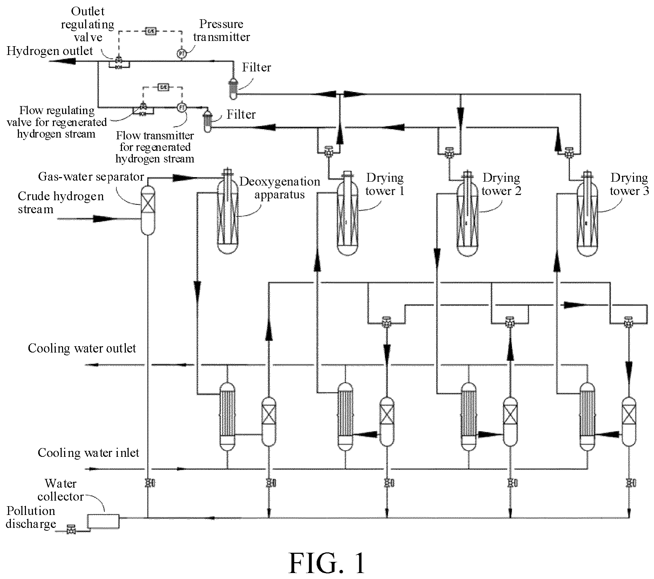

In a first embodiment, as shown in FIG. 1, heating inside the regeneration drying tower (without an external heating apparatus) is used in the process. The regeneration drying tower has an inner cylinder and an outer cylinder, an adsorbent is filled between the inner cylinder and the outer cylinder, and a heating element is arranged inside the inner cylinder. The second portion of the purified hydrogen stream is introduced into the regeneration drying tower, and the second portion of the purified hydrogen stream is heated by the heating element.

In a second embodiment, as shown in FIG. 3, the process of heating the second portion of the purified hydrogen stream outside the regeneration drying tower includes: the second portion of the purified hydrogen stream is first introduced into an external heating apparatus for heating, and then the heated second portion of the purified hydrogen stream is introduced into the regeneration drying tower.

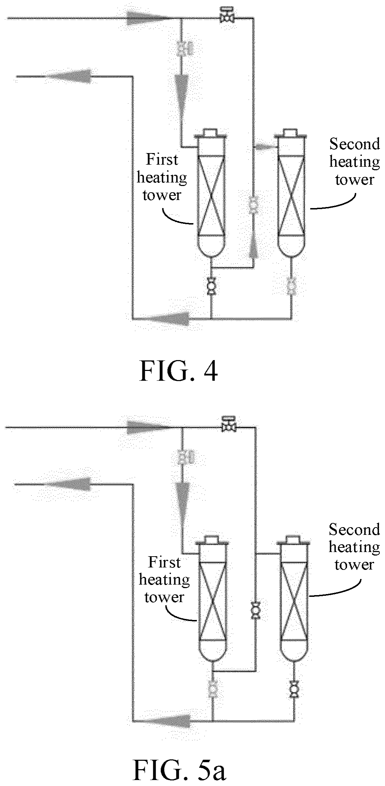

In a specific embodiment, the external heating apparatus includes a first heating tower and a second heating tower. The first heating tower and the second heating tower can use a heat conduction oil heating manner or an electric heating manner. The first heating tower and the second heating tower are used in series (as shown in FIG. 4), or used in parallel (as shown in FIG. 5a to FIG. 5b).

In the present application, for the manner of heating the second portion of the purified hydrogen stream in the regeneration drying tower, a plurality of electric heating pipes are arranged in each of external heating towers, and each of the electric heating pipes is possibly damaged. Two external heating towers can be standby for each other, and can be used in series. When used in series, the external heating towers can adapt to fully heat the hydrogen during the operation of the hydrogen production system at a high power; and when used separately, the external heating towers can adapt to heat the regenerated hydrogen stream during the operation of the hydrogen production system at a low power, so as to meet heating requirements of the system at different powers.

In a more specific embodiment, as shown in FIG. 4, two external heating towers are used in series. The regenerated hydrogen stream from the primary working drying tower first enters the left heating tower for heating and then enters the right heating tower for heating, and then the regenerated hydrogen stream flows out and enters the regeneration drying tower.

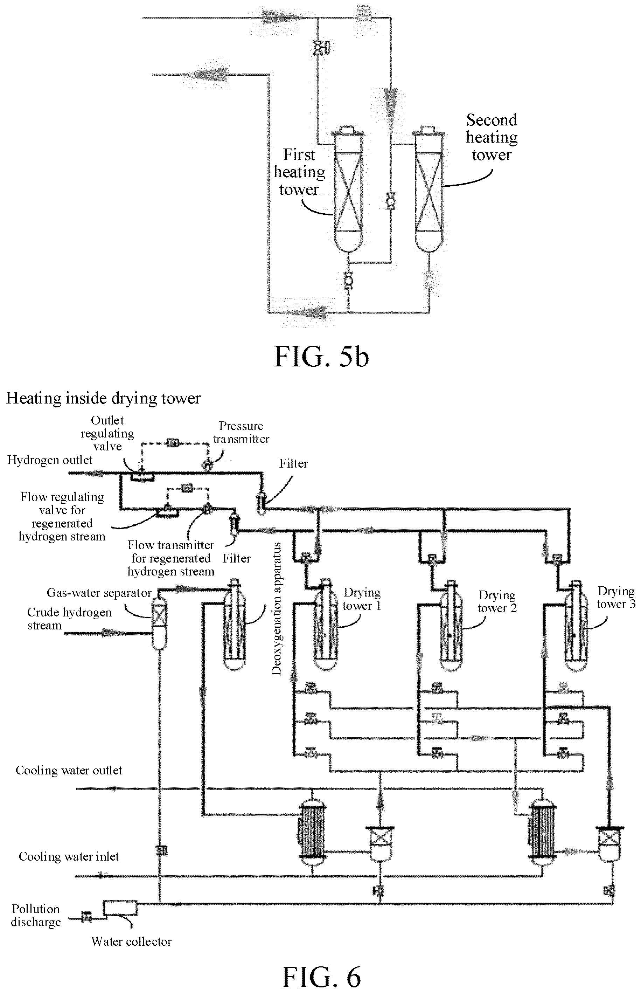

In another specific embodiment, as shown in FIG. 5a to FIG. 5b, two external heating towers are used in parallel and are standby for each other. For example, in FIG. 5a, the left heating tower is used as the external heating tower to operate, and the right heating tower is standby. In FIG. 5b, the right heating tower is used as the external heating tower to operate, and the left heating tower is standby. The regenerated hydrogen stream from the primary working drying tower enters the heating tower in operation for heating, and then the heated regenerated hydrogen stream flows out and enters the regeneration drying tower.

In an embodiment, a first drying tower, a second drying tower and a third drying tower are used. When one of the drying towers is used as the primary working drying tower, the other two drying towers are respectively used as the regeneration drying tower and the supplemental working drying tower. The method includes:

the first drying tower is used as the primary working drying tower, the second drying tower is used as the regeneration drying tower, and the third drying tower is used as the supplemental working drying tower; when a first preset switching condition is met, the second drying tower is switched as the primary working drying tower, the third drying tower is switched as the regeneration drying tower, and the first drying tower is switched as the supplemental working drying tower;

when a second preset switching condition is met, the third drying tower is switched as the primary working drying tower, the first drying tower is switched as the regeneration drying tower, and the second drying tower is switched as the supplemental working drying tower; and

when a third preset switching condition is met, the first drying tower is switched as the primary working drying tower, the second drying tower is switched as the regeneration drying tower, and the third drying tower is switched as the supplemental working drying tower.

In the present application, the first preset switching condition, the second preset switching condition and the third preset switching condition can be set and regulated according to actual process requirements. For example, the first preset switching condition, the second preset switching condition and the third preset switching condition independently include: a hydrogen outlet temperature of the regeneration drying tower is greater than a boiling point of water under a pressure inside the regeneration drying tower.

In a specific embodiment, when a working pressure of a purification system is 1.4 MPa, a pressure inside the regeneration drying tower is 1.4 MPa, and a boiling point of water is 194.1°C. By monitoring a temperature at an outlet of the regeneration drying tower, when the temperature is greater than 194.1°C, the second portion of the purified hydrogen stream is stopped heating, but this portion of purified hydrogen stream is directly introduced into the regeneration drying tower, or this portion of purified hydrogen stream is first introduced into a cooler for cooling to produce a blow-cooled hydrogen stream which is then introduced into the regeneration drying tower. When the regeneration drying tower is blow-cooled to 35-45°C, a switching operation is performed or can also be set and regulated according to actual process requirements.

In a specific embodiment, the method further includes: after the first preset switching condition, the second preset switching condition or the third preset switching condition is met, first, the temperature of the regeneration drying tower is reduced, and then, the switching operation is performed. The temperature inside the regeneration drying tower is reduced to about 35-45°C, and can also be set and regulated according to actual process requirements.

In the present application, the temperature reduction processing of the regeneration drying tower can be controlled by introducing the second portion of the purified hydrogen stream to the regeneration drying tower. For example, the second portion of the purified hydrogen stream from the primary working drying tower is not heated by an external heating apparatus, but is directly introduced into the regeneration drying tower, or this portion of purified hydrogen stream is first introduced into a cooler for cooling to produce a blow-cooled hydrogen stream which is then introduced into the regeneration drying tower to reduce the temperature of the drying tower.

In the present application, the switching of the three drying towers, the circulation of materials, and the like are all controlled by a PLC, and the entire system operates fully automatically without manual intervention.

In an embodiment, a fourth drying tower is further included. When any of the three drying towers in operation is switched out, the fourth drying tower is switched in to replace the drying tower to be switched out. In the present application, the fourth drying tower is provided as a standby, which can replace the drying tower with poor regeneration caused by a reduced gas flow. The switching of the four drying towers, the circulation of materials, and the like are all controlled by a PLC.

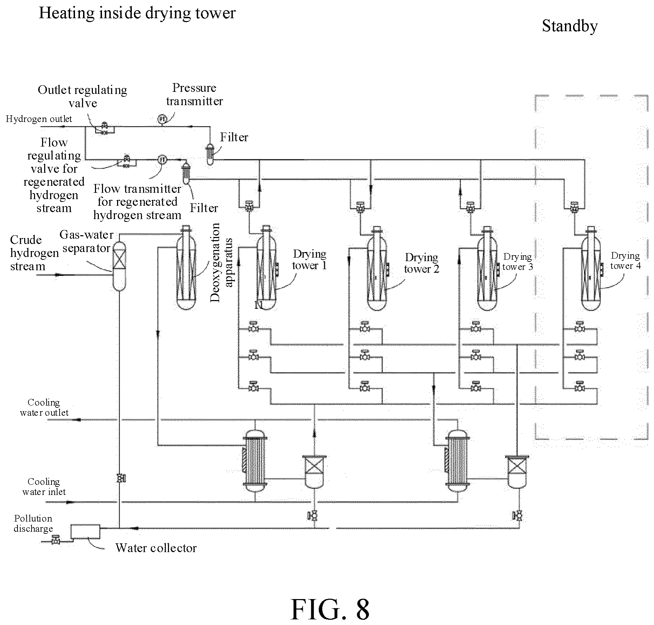

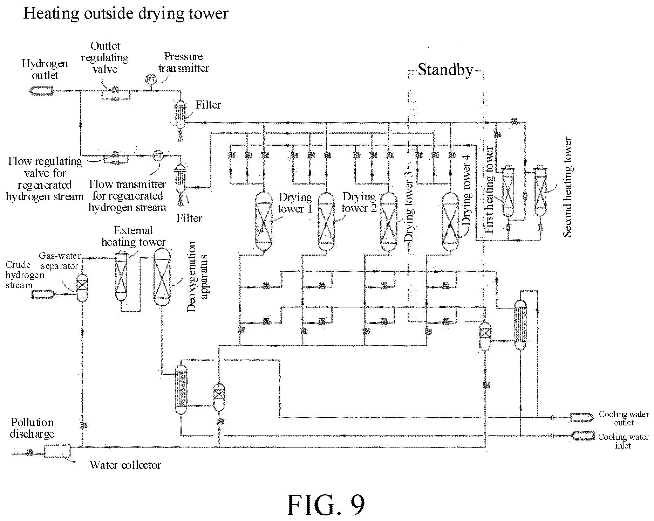

As shown in FIG. 8 or FIG. 9 (a heating manner inside a tower is used in FIG. 8, and a heating manner outside a tower is used in FIG. 9), the present application is provided with a fourth drying tower as a standby. Any one of the four drying towers (drying tower 1, drying tower 2, drying tower 3, and drying tower 4) can be set as a standby drying tower to replace a problematic drying tower, so as to ensure the overall operation processes of the third towers. The alternative use of the standby drying tower is achieved by manually selecting tower-to-tower switching on a system monitoring screen, and is automatically completed by a system controller logic program, thereby being convenient and labor-saving. Specifically, the drying tower 1, the drying tower 2 and the drying tower 3 are in use, and the drying tower 4 is used as a standby, where the drying tower 1, the drying tower 2 and the drying tower 3 are switched to be used as the primary working drying tower, the regeneration drying tower and the supplemental working drying tower according to the above method. When any one of the drying tower 1, the drying tower 2 and the drying tower 3 is switched out (for example, switched out for maintenance), taking an example in which the drying tower 2 is used as the regeneration drying tower to be switched out, the standby drying tower 4 is switched out to replace the drying tower 2 as the regeneration drying tower, so as to maintain the stable operation of the system. Alternatively, the drying tower 2, the drying tower 3 and the drying tower 4 are in use, and the drying tower 1 is used as a standby tower. In this case, when the drying tower 3 for working drying is switched out, the drying tower 1 is switched in as the primary working drying tower to replace the drying tower 3 to be switched out, so as to maintain the stable operation of the system. The principle of switching a standby drying tower into use to replace a drying tower in operation in various other situations is the same, so it will not be repeated here.

In a specific embodiment, the method further includes: first monitoring is performed on the dried regenerated hydrogen stream from the supplemental working drying tower. When a first monitoring result of the dried regenerated hydrogen stream does not reach a first preset standard, the dried regenerated hydrogen stream is evacuated through the draw-off pipeline for the dried regenerated gas stream. When the first monitoring result of the dried regenerated hydrogen stream reaches the first preset standard, the dried regenerated hydrogen stream is stopped evacuating, and the dried regenerated hydrogen stream is introduced into a hydrogen storage apparatus.

In an embodiment, the method further includes: a second monitoring is performed on a first portion of the purified hydrogen stream from the primary working drying tower.

When a second monitoring result does not reach a second preset standard, the first portion of the purified hydrogen stream is evacuated through the draw-off pipeline for the product gas stream.

When the second monitoring result reaches the second preset standard, the first portion of the purified hydrogen stream is stopped evacuating, and the first portion of the purified hydrogen stream is introduced into the hydrogen storage apparatus as a product hydrogen stream through the draw-off pipeline for the product gas stream. By monitoring the hydrogen from the primary working drying tower or the supplemental working drying tower, it is conducive to ensuring the quality of the hydrogen introduced into the hydrogen storage apparatus.

In the present application, monitoring standards can be set according to actual process situations and product requirements.

For example, the first monitoring includes nitrogen and methane content monitoring; the second monitoring includes micro oxygen and dew point monitoring; the first preset standard includes: a volume content of nitrogen is less than 0.2 PPM, and a volume content of methane is less than 0.2 PPM; and the second preset standard includes: a volume content of oxygen is less than 1 PPM, and a dew point of purified hydrogen stream is -80°C or below.

In the present application, an online chromatograph can be used as an apparatus for the first monitoring and second monitoring.

A manner of switching the first drying tower, the second drying tower and the third drying tower in the present application is described below:

As shown in FIG. 1, the system includes three drying towers: a first drying tower (drying tower 1), a second drying tower (drying tower 2) and a third drying tower (drying tower 3). Taking an example in which the first drying tower is used as the primary working drying tower, the second drying tower is used as the regeneration drying tower, and the third drying tower is used as the supplemental working drying tower:

the crude hydrogen stream is first introduced into the first drying tower for a first adsorption processing to produce a purified hydrogen stream, and then the purified hydrogen stream is introduced into a monitoring apparatus for the second monitoring (including micro oxygen and dew point monitoring). According to the second monitoring result, when the purified hydrogen stream does not reach the second preset standard, the purified hydrogen stream is evacuated. In this process, the primary working drying tower continues to operate, and the monitoring apparatus continues to perform the second monitoring on the purified hydrogen stream. When the second monitoring result of the purified hydrogen stream reaches the second preset standard, the purified hydrogen stream is collected as a product hydrogen stream, for example, introduced into a hydrogen storage tank for collection.

When regeneration is performed on the second drying tower, a portion of purified hydrogen stream from the first drying tower is still directed as a product hydrogen stream. A small amount of purified hydrogen stream (10-20 vol% of the total volume of purified hydrogen stream during the operation of the hydrogen production system at the rated power) is introduced into the second drying tower for reverse blowing to implement desorption and regeneration of impurities adsorbed by the adsorbent, and the impurities after desorption flow out with the blown hydrogen (as regenerated hydrogen stream).

The regenerated hydrogen stream is introduced into the third drying tower for a second adsorption processing to remove residual water and the like, so as to produce a dried regenerated hydrogen stream. The dried regenerated hydrogen stream is directed through the draw-off pipeline for the dried regenerated gas stream, and the first monitoring is performed on the dried regenerated hydrogen stream. When the first monitoring result of the dried regenerated hydrogen stream does not reach the first preset standard, the dried regenerated hydrogen stream is evacuated through the draw-off pipeline for the dried regenerated gas stream. When the first monitoring result of the dried regenerated hydrogen stream reaches the first preset standard, the dried regenerated hydrogen stream is stopped evacuating, and the draw-off flow rate of the dried regenerated hydrogen stream is monitored. When the draw-off flow rate of the dried regenerated hydrogen stream is less than the threshold, the opening degree of the flow regulating valve for the regenerated hydrogen stream on the draw-off pipeline for the dried regenerated gas stream is increased, or the opening degree of the flow regulating valve for the regenerated hydrogen stream on the draw-off pipeline for the product gas stream is reduced, so as to increase a flow rate of the regenerated hydrogen stream introduced into the regeneration drying tower (second drying tower) (a manner of increasing the opening degree of the flow regulating valve for the regenerated hydrogen stream on the draw-off pipeline for the dried regenerated gas stream is used in the process shown in FIG. 1). During the operation at the rated power, the draw-off flow threshold of the dried regenerated hydrogen stream is $L_1$ (during the operation of the hydrogen production system at the rated power, the total flow rate of the purified hydrogen stream from the primary working drying tower is L, and the

$L_1$ can be set to 10-20% of the L), and the flow regulating valve for the regenerated hydrogen stream is regulated to maintain the flow rate of the regenerated hydrogen stream introduced into the regeneration drying tower at 80-120% of the $L_1$.

The hydrogen is continuously processed, and when the first preset switching condition is met, the second drying tower is switched as the primary working drying tower, the third drying tower is switched as the regeneration drying tower, and the first drying tower is switched as the supplemental working drying tower (the regeneration sequence of the first drying tower and the third drying tower can be arbitrarily set, and here, for example, regeneration is first performed on the third drying tower for explanation). As shown in FIG. 1, the second drying tower is used as the primary working drying tower, the third drying tower is used as the regeneration drying tower, and the first drying tower is used as the supplemental working drying tower. Moreover, in this working mode, the specific technological process of the primary working drying tower, the regeneration drying tower and the supplemental working drying tower is the same as the above content, including: the crude hydrogen stream is introduced into the second drying tower for a first adsorption processing to produce a purified hydrogen stream. The purified hydrogen stream is divided into two portions. The first portion of the purified hydrogen stream is directed as a product hydrogen stream through the draw-off pipeline for the product gas stream. The second portion of the purified hydrogen stream is introduced into the third drying tower to perform a reverse blowing regeneration processing on the adsorbent therein, so as to produce a regenerated hydrogen stream and a regenerated adsorbent. The regenerated hydrogen stream is introduced into the first drying tower for a second adsorption processing to produce a dried regenerated hydrogen stream. The dried regenerated hydrogen stream is directed through the draw-off pipeline for the dried regenerated gas stream, and the first monitoring is performed on the dried regenerated hydrogen stream. When the first monitoring result of the dried regenerated hydrogen stream does not reach the first preset standard, the dried regenerated hydrogen stream is evacuated through the draw-off pipeline for the dried regenerated gas stream. When the first monitoring result of the dried regenerated hydrogen stream reaches the first preset standard, the dried regenerated hydrogen stream is stopped evacuating, and the draw-off flow rate of the dried regenerated hydrogen stream is monitored. When the draw-off flow rate of the dried regenerated hydrogen stream is less than the threshold, the opening degree of the flow regulating valve for the regenerated hydrogen stream on the draw-off pipeline for the dried regenerated gas stream is increased, or the opening degree of the flow regulating valve for the regenerated hydrogen stream on the draw-off pipeline for the product gas stream is reduced, so as to increase a flow rate of the regenerated hydrogen stream introduced into the regeneration drying tower (third drying tower) (a manner of increasing the opening degree of the flow regulating valve for the regenerated hydrogen stream on the draw-off pipeline for the dried regenerated gas stream is used in the process shown in FIG. 1).

The hydrogen is continuously processed, and when the second preset switching condition is met, the third drying tower is switched as the primary working drying tower, the first drying tower is switched as the regeneration drying tower, and the second drying tower is switched as the supplemental working drying tower. As shown in FIG. 1, the third drying tower is used as the primary working drying tower, the first drying tower is used as the regeneration drying tower, and the second drying tower is used as the supplemental working drying tower. Moreover, in this working mode, the specific technological process of the primary working drying tower, the regeneration drying tower and the supplemental working drying tower is the same as the above content, and will not be repeated here.

Further, a fourth drying tower (drying tower 4) is used. During the above switching process of the first drying tower, the second drying tower and the third drying tower, the fourth drying tower can be switched into the system at any time to replace the drying tower switched out from the first drying tower, the second drying tower and the third drying tower. After the switched-out drying tower can be used normally (for example, after the maintenance is completed), the switched-out drying tower is used as the fourth drying tower as a standby.

In an embodiment, the first drying tower, the second drying tower, the third drying tower and the fourth drying tower (four-tower process) are used. Moreover, in the regeneration phase, the second portion of the purified hydrogen stream from the primary working drying tower is heated inside the tower or heated outside the tower. As shown in FIG. 8, the process uses "four drying towers and heating inside towers", where the drying tower 4 is used as a standby. As shown in FIG. 9, the process uses "four drying towers and heating outside towers".

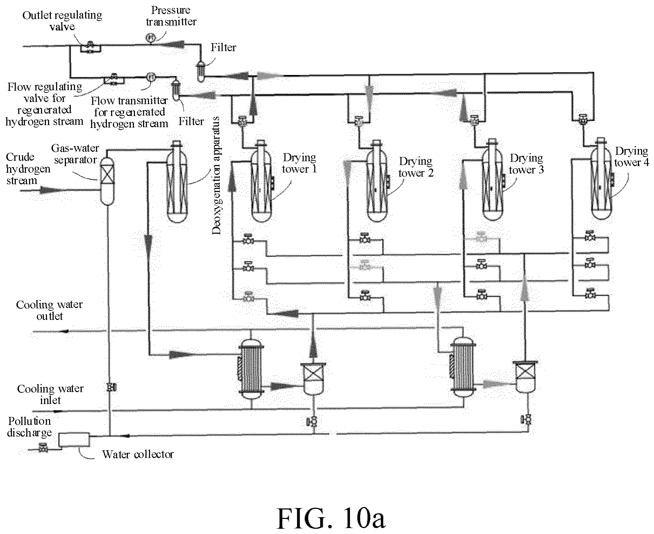

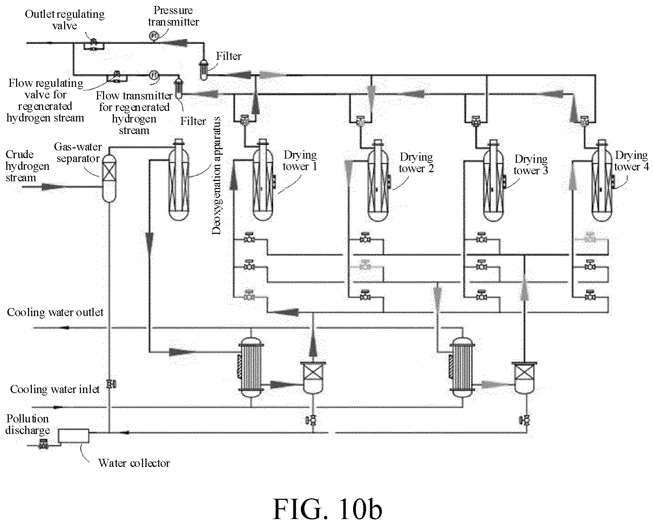

Specifically, referring to FIG. 10a to FIG. 10b (a manner of heating inside the regeneration drying tower is used), in FIG. 10a, the drying tower 1 is used as the primary working drying tower, the drying tower 2 is used as the regeneration drying tower, the drying tower 3 is used as the supplemental working drying tower, and the drying tower 4 is used as a standby, where the drying tower 3 is switched out for maintenance. The technological process after replacement is shown in FIG. 10b, where the drying tower 1 is used as the primary working drying tower, the drying tower 2 is used as the regeneration drying tower, the drying tower 3 needs to be maintained, the drying tower 4 is used as the supplemental working drying tower, the regenerated hydrogen stream from the regeneration drying tower 2 and the regeneration cooling and separating unit enters the drying tower 4, and the dried regenerated hydrogen stream directed from the drying tower 4 flows out through the draw-off pipeline for the dried regenerated gas stream.

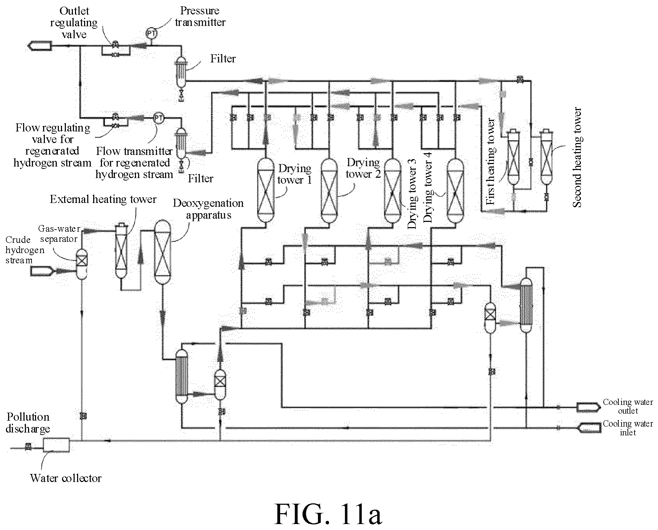

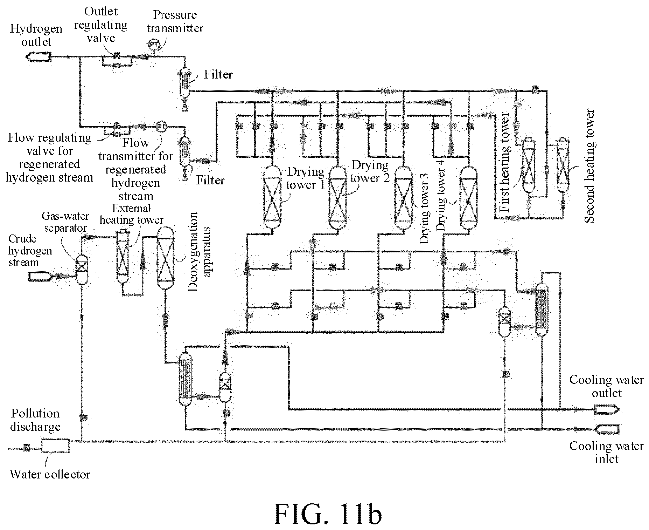

Referring to FIG. 11a to FIG. 11b (a manner of heating outside the regeneration drying tower is used), in FIG. 11a, the drying tower 1 is used as the primary working drying tower, the drying tower 2 is used as the regeneration drying tower, the drying tower 3 is used as the supplemental working drying tower, and the drying tower 4 is used as a standby, where the drying tower 3 is switched out for maintenance. The technological process after replacement is shown in FIG. 11b, where the drying tower 1 is used as the primary working drying tower, the drying tower 2 is used as the regeneration drying tower, the drying tower 3 needs to be maintained, the drying tower 4 is used as the supplemental working drying tower, the regenerated hydrogen stream from the regeneration drying tower 2 and the regeneration cooling and separating unit enters the drying tower 4, and the dried regenerated hydrogen stream directed from the drying tower 4 flows out through the draw-off pipeline for the dried regenerated gas stream.

In the present application, a cooling and separating unit is further provided and configured to cool and separate the stream before being introduced into the drying tower, so as to increase the processing efficiency.

In a first embodiment, the primary working drying tower is connected to a working cooling and separating unit for cooling and separating the stream before being introduced into the primary working drying tower; the regeneration drying tower is connected to a regeneration cooling and separating unit for cooling and separating the regenerated hydrogen stream; and the supplemental working drying tower is connected to a supplemental drying cooling and separating unit for cooling and separating the gas introduced into the supplemental working drying tower.

The method further includes:

a crude hydrogen stream is heated by a pre-heater and then enters a deoxygenation apparatus for a deoxygenation processing to produce a deoxygenated electrolytic hydrogen stream, and the deoxygenated electrolytic hydrogen stream is introduced into a first cooling and separating unit for cooling and separating to produce a first gas phase and a first liquid phase;

the first gas phase is introduced into the working cooling and separating unit for cooling and separating to produce a working cooling gas phase and a working cooling liquid phase; the working cooling gas phase is introduced into the primary working drying tower for processing to produce the purified hydrogen stream;

the regenerated hydrogen stream from the regeneration drying tower is introduced into the regeneration cooling and separating unit for cooling and separating to produce a regenerated hydrogen separated gas phase and a regenerated hydrogen stream separated liquid phase;

the regenerated hydrogen separated gas phase from the regeneration cooling and separating unit is introduced into the supplemental drying cooling and separating unit for separating and cooling to produce a supplemental dried regenerated gas phase and a supplemental dried regenerated liquid phase; and the supplemental dried regenerated gas phase is introduced into the supplemental working drying tower for processing to produce the dried regenerated hydrogen stream.

In a second embodiment, the regeneration drying tower is connected to a regeneration cooling and separating unit for cooling and separating the regenerated hydrogen stream.

The method further includes:

a crude hydrogen stream is heated by a pre-heater and then enters a deoxygenation apparatus for a deoxygenation processing to produce a deoxygenated electrolytic hydrogen stream, and the deoxygenated electrolytic hydrogen stream is introduced into a first cooling and separating unit for cooling and separating to produce a first gas phase and a first liquid phase;

the first gas phase is introduced into the primary working drying tower for processing to produce the purified hydrogen stream;

the regenerated hydrogen stream from the regeneration drying tower is introduced into the regeneration cooling and separating unit for cooling and separating to produce a regenerated hydrogen separated gas phase and a regenerated hydrogen stream separated liquid phase; and

the regenerated hydrogen separated gas phase is introduced into the supplemental working drying tower for processing to produce the dried regenerated hydrogen stream. The present application can be only provided with the first cooling and separating unit and the regeneration cooling and separating unit, thereby effectively simplifying the technological process and pipeline connection.

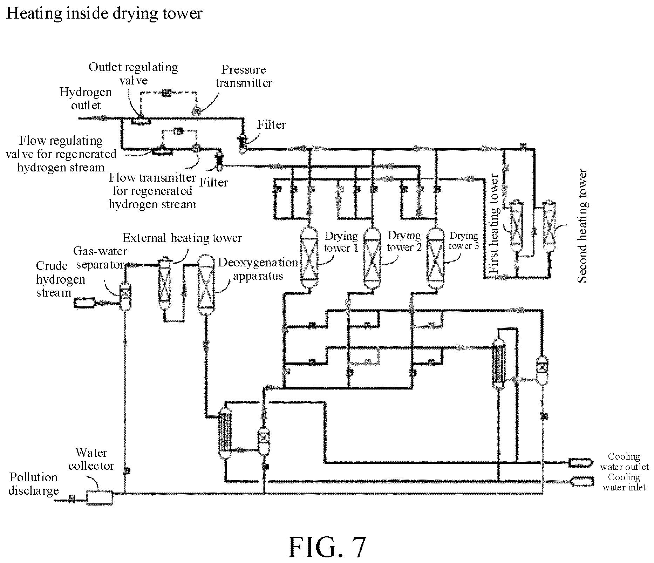

Specifically, as shown in FIG. 6 or FIG. 7 (the second portion of the purified hydrogen stream is heated inside the regeneration drying tower in FIG. 6, and the second portion of the purified hydrogen stream is heated outside the regeneration drying tower in FIG. 7), except that the first cooling and separating processing is performed on the deoxygenated electrolytic hydrogen stream from the deoxygenation apparatus, only one regeneration cooling and separating unit is provided in the subsequent process to cool and separate the regenerated hydrogen stream from the regeneration drying tower, and then the gas phase produced by cooling and separating is introduced into the supplemental working drying tower.

A second aspect of the present application provides a system for purifying and drying a hydrogen stream. The system includes a primary working drying tower, a regeneration drying tower and a supplemental working drying tower. Moreover, the system is configured to have a drying working condition, a regeneration working condition and a supplemental drying condition that are sequentially operated.

The drying working condition is configured to introduce a crude hydrogen stream produced by a hydrogen production system into the primary working drying tower for an adsorption processing to produce a purified hydrogen stream.

The regeneration working condition is configured to divide the purified hydrogen stream from the primary working drying tower into two portions; direct the first portion of the purified hydrogen stream product as a product hydrogen stream through a draw-off pipeline for the product gas stream; and introduce the second portion of the purified hydrogen stream into the regeneration drying tower to regenerate an adsorbent thereof to produce a regenerated hydrogen stream and a regenerated adsorbent.

The supplemental drying condition is configured to introduce the regenerated hydrogen stream into the supplemental working drying tower for a second adsorption processing to produce a dried regenerated hydrogen stream; direct the dried regenerated hydrogen stream through a draw-off pipeline for the dried regenerated hydrogen gas stream, and monitor a draw-off flow rate of the dried regenerated hydrogen stream; and increase an opening degree of a flow regulating valve for the regenerated hydrogen stream on the draw-off pipeline for the dried regenerated gas stream or reduce an opening degree of a flow regulating valve for the regenerated hydrogen stream on the draw-off pipeline for the product gas stream when the draw-off flow rate of the dried regenerated hydrogen stream is less than a threshold, so as to increase a flow rate of the regenerated hydrogen stream introduced into the regeneration drying tower.

The draw-off pipeline for the product gas stream and the draw-off pipeline for the dried regenerated gas stream converge to form a product header pipeline.

In an embodiment, the system includes a flow regulating valve for the regenerated hydrogen stream and a flow monitor. The flow regulating valve for the regenerated hydrogen stream and the flow monitor are coupled with a controller via signal connection. The flow regulating valve for the regenerated hydrogen stream and the flow monitor are arranged on the draw-off pipeline for the dried regenerated gas stream. Alternatively, the flow monitor is arranged on the draw-off pipeline for the dried regenerated gas stream, and the flow regulating valve for the regenerated hydrogen stream is arranged on the draw-off pipeline for the product gas stream.

In an embodiment, the draw-off pipeline for the product gas stream is provided with a pressure monitor and a regulating valve for the product hydrogen stream.

The pressure monitor and the regulating valve for the product hydrogen stream are coupled with a controller via signal connection. An opening degree of the regulating valve for the product hydrogen stream is configured to be set according to a rated pressure of the system. Further, in an embodiment, as shown in FIG. 2c and FIG. 2d, when the flow regulating valve for the regenerated hydrogen stream is arranged on the draw-off pipeline for the product gas stream, the flow regulating valve for the regenerated hydrogen stream is arranged on an upstream side of the regulating valve for the product hydrogen stream to enable the product hydrogen stream from the primary working drying tower to flow out sequentially through the flow regulating valve for the regenerated hydrogen stream, the pressure monitor and the regulating valve for the product hydrogen stream.

In a specific embodiment, the outlet regulating valve for the product hydrogen stream is selected from one of a film pneumatic regulating valve (as shown in FIG. 2a and FIG. 2c), or a self-operated pressure regulating valve (as shown in FIG. 2b and FIG. 2d).

In a specific embodiment, the system includes a first drying tower, a second drying tower and a third drying tower. The system configures the first drying tower, the second drying tower and the third drying tower to be sequentially recycled as a primary working drying tower, a regeneration drying tower and a supplemental working drying tower in a drying working condition, a regeneration working condition and a supplemental drying condition. The specific manner of switching the first drying tower, the second drying tower and the third drying tower is described in detail in the above content, and will not be repeated here.

In an embodiment, the system further includes a fourth drying tower. The system configures the fourth drying tower such that: when any of the three drying towers in operation is switched out, the fourth drying tower is switched in to replace the drying tower to be switched out.

In an embodiment, the system further includes an external heating apparatus, configured to heat the regenerated hydrogen stream before being introduced into the regeneration drying tower.

In an embodiment, the external heating apparatus includes a first heating tower and a second heating tower, and the first heating tower and the second heating tower are used in series (as shown in FIG. 5a) or used in parallel (as shown in FIG. 5b).

In an embodiment, as shown in FIG. 1, the system further includes a first connection unit, configured to direct the product hydrogen stream produced from the drying tower used as the primary working drying tower. The first connection unit includes a first product hydrogen stream branch, a second product hydrogen stream branch and a third product hydrogen stream branch. An opening on one side of the first product hydrogen stream branch communicates with the first drying tower, an opening on one side of the second product hydrogen stream branch communicates with the second drying tower, and an opening on one side of the third product hydrogen stream branch communicates with the third drying tower. An opening on the other side of the first product hydrogen stream branch, an opening on the other side of the second product hydrogen stream branch and an opening on the other side of the third product hydrogen stream branch respectively communicate with the draw-off pipeline for the product gas stream.

Moreover, the draw-off pipeline for the product gas stream is further provided with an online monitoring apparatus branch, configured to perform online monitoring on the directed product hydrogen stream, so as to evacuate the product hydrogen stream or introduce the product hydrogen stream into a hydrogen storage apparatus according to a monitoring result.

In an embodiment, as shown in FIG. 8 or FIG. 9, the system further includes a fourth drying tower. The first connection unit further includes a fourth product hydrogen stream branch. An opening on one side of the fourth product hydrogen stream branch communicates with the fourth drying tower, and an opening on the other side of the fourth product hydrogen stream branch communicates with the draw-off pipeline for the product gas stream. When the fourth drying tower is switched into the system to replace the primary working drying tower, the first connection unit can direct the product hydrogen stream produced from the fourth drying tower used as the primary working drying tower.

In an embodiment, as shown in FIG. 1, the system further includes a second connection unit, configured to direct the dried regenerated hydrogen stream produced from the drying tower used as the supplemental working drying tower. The second connection unit includes a first regenerated hydrogen stream branch, a second regenerated hydrogen stream branch and a third regenerated hydrogen stream branch.

An opening on one side of the first regenerated hydrogen stream branch communicates with a gas outlet of the first drying tower, an opening on one side of the second regenerated hydrogen stream branch communicates with a gas outlet of the second drying tower, and an opening on one side of the third regenerated hydrogen stream branch communicates with a gas outlet of the third drying tower. An opening on the other side of the first regenerated hydrogen stream branch, an opening on the other side of the second regenerated hydrogen stream branch and an opening on the other side of the third regenerated hydrogen stream branch respectively communicate with the draw-off pipeline for the dried regenerated gas stream.

Moreover, the draw-off pipeline for the dried regenerated gas stream is further provided with an online monitoring apparatus branch, configured to perform online monitoring on the directed dried regenerated hydrogen stream, so as to evacuate the dried regenerated hydrogen stream or introduce the dried regenerated hydrogen stream into a hydrogen storage apparatus according to a monitoring result.

In an embodiment, as shown in FIG. 8 or FIG. 9, the system further includes a fourth drying tower. The second connection unit further includes a fourth regenerated hydrogen stream branch. An opening on one side of the fourth regenerated hydrogen stream branch communicates with a gas outlet of the fourth drying tower, and an opening on the other side of the fourth regenerated hydrogen stream branch communicates with the draw-off pipeline for the dried regenerated gas stream. When the fourth drying tower is switched into the system to replace the supplemental working drying tower, the second connection unit can direct the dried regenerated hydrogen stream produced from the fourth drying tower used as the supplemental working drying tower.

In an embodiment, as shown in FIG. 1, the system further includes a third connection unit, configured to separate a second portion of the purified hydrogen stream from the primary working drying tower in the drying working condition to enter the regeneration drying tower in the regeneration working condition. The third connection unit includes a first regeneration branch, a second regeneration branch, a third regeneration branch and a regenerated hydrogen stream header line.

An opening on one side of the first regeneration branch communicates with the first drying tower, an opening on one side of the second regeneration branch communicates with the second drying tower, and an opening on one side of the third regeneration branch communicates with the third drying tower.

An opening on the other side of the first regeneration branch, an opening on the other side of the second regeneration branch and an opening on the other side of the third regeneration branch respectively communicate with the regenerated hydrogen stream header line. Moreover, the regenerated hydrogen stream header line communicates with the gas outlets of the first drying tower, the second drying tower and the third drying tower, so as to introduce the second portion of the purified hydrogen stream from the primary working drying tower into the regeneration drying tower to reversely blow the adsorbent.

In the above description of the first connection unit, the second connection unit and the third connection unit, in one state, only one of the branches contained in each connection unit communicates with the corresponding drying tower.

In an embodiment, as shown in FIG. 8 or FIG. 9, the system further includes a fourth drying tower. The third connection unit further includes a fourth regeneration branch. An opening on one side of the fourth regeneration branch communicates with the fourth drying tower, and an opening on the other side of the fourth regeneration branch communicates with the regenerated hydrogen stream header line. When the fourth drying tower is switched into the system to replace the regeneration drying tower, the third connection unit can enable the second portion of regenerated hydrogen stream separated from the primary working drying tower in the drying working condition to enter the fourth drying tower in the regeneration working condition.

In an embodiment, as shown in FIG. 9, a tower-outside heating apparatus is used. The tower-outside heating apparatus includes a heating inlet and an after-heating outlet. The regenerated hydrogen stream drying header line includes a heating front-section branch and a heating rear-section branch. An inlet end of the heating front-section branch communicates with product hydrogen stream outlets of the first drying tower, the second drying tower, the third drying tower and the fourth drying tower. An outlet end of the heating front-section branch communicates with the heating inlet of the tower-outside heating apparatus, so as to introduce the second portion of the purified hydrogen stream generated by the drying tower used as the primary working drying tower in the first drying tower, the second drying tower, the third drying tower and the fourth drying tower into the external heating apparatus for heating. The after-heating outlet of the tower-outside heating apparatus communicates with an inlet end of the heating rear-section branch. An outlet end of the heating rear-section branch respectively communicates with regenerated hydrogen stream inlets of the first drying tower, the second drying tower, the third drying tower and the fourth drying tower, so as to introduce the heated regenerated hydrogen stream from the tower-outside heating apparatus into the drying tower used as the regeneration drying tower in the first drying tower, the second drying tower, the third drying tower and the fourth drying tower.

In a specific embodiment, as shown in FIG. 1, the system further includes a deoxygenation apparatus. The deoxygenation apparatus is configured to perform a deoxygenation processing on a crude hydrogen stream to produce a deoxygenated crude hydrogen stream. A deoxygenated crude hydrogen stream outlet of the deoxygenation apparatus communicates with an inlet of the primary working drying tower.

In an embodiment, the system further includes a first cooling and separating unit. The first cooling and separating unit is configured to perform a first cooling processing and a first separation processing on the deoxygenated crude hydrogen stream from the deoxygenation apparatus to produce a first gas phase and a first liquid phase. A first gas phase outlet of the first cooling and separating unit communicates with the inlet of the primary working drying tower.

In the present application, according to use situations, corresponding cooling and separating units can be respectively configured for the primary working drying tower, the regeneration drying tower and the supplemental working drying tower, or only a corresponding cooling and separating unit is configured for the regeneration drying tower.

In a first specific embodiment, as shown in FIG. 1 and FIG. 3, the system includes a working cooling and separating unit, a regeneration cooling and separating unit and a supplemental working cooling and separating unit. The working cooling and separating unit is configured to cool and separate the stream before being introduced into the primary working drying tower. The regeneration cooling and separating unit is configured to cool and separate the regenerated hydrogen stream produced from the regeneration drying tower. The supplemental working cooling and separating unit is configured to cool and separate the stream before being introduced into the supplemental working drying tower.

In a specific embodiment, as shown in FIG. 1 or FIG. 3, the system includes a second cooling and separating unit, a third cooling and separating unit and a fourth cooling and separating unit. The second cooling and separating unit is arranged corresponding to the first drying tower. The third cooling and separating unit is arranged corresponding to the second drying tower. The fourth cooling and separating unit is arranged corresponding to the third drying tower. When the first drying tower, the second drying tower and the third drying tower are in different working conditions, the second cooling and separating unit, the third cooling and separating unit and the fourth cooling and separating unit are correspondingly used as one of the cooling and separating unit, the regeneration cooling and separating unit and the supplemental working cooling and separating unit.

In a second specific embodiment, as shown in FIG. 7, FIG. 8 or FIG. 9, the system includes a regeneration cooling and separating unit. The regeneration cooling and separating unit is configured to cool and separate the regenerated hydrogen stream produced from the regeneration drying tower.

Each apparatus used in the present application has a common structure in the art. For example, the first cooling and separating unit, the working cooling and separating unit, the regeneration cooling and separating unit and the supplemental working cooling and separating unit include one or two or more coolers and gas-water separators connected in series.

In a specific embodiment, the system further includes a water collector. Liquid outlets of the first cooling and separating unit, the working cooling and separating unit, the regeneration cooling and separating unit and the supplemental working cooling and separating unit in the system all communicate with the water collector.

**Embodiment 1**

As shown in FIG. 1, this embodiment provides a system for purifying and drying a hydrogen stream.
The system includes a first drying tower, a second drying tower and a third drying tower, where regenerated hydrogen stream is heated inside towers (an external heating apparatus for regenerated hydrogen stream is not provided). The system configures the first drying tower, the second drying tower and the third drying tower to be sequentially recycled as a primary working drying tower, a regeneration drying tower and a supplemental working drying tower in a drying working condition, a regeneration working condition and a supplemental drying condition.

The system includes a flow regulating valve for the regenerated hydrogen stream and a flow monitor. The flow regulating valve for the regenerated hydrogen stream and the flow monitor are coupled with a controller via signal connection. The flow regulating valve for the regenerated hydrogen stream and the flow monitor are arranged on the draw-off pipeline for the dried regenerated gas stream.

The draw-off pipeline for the product gas stream is provided with a pressure monitor and an outlet regulating valve for the product hydrogen stream, and the pressure monitor and the outlet regulating valve for the product hydrogen stream are coupled with a controller via signal connection. An opening degree of the outlet regulating valve for the product hydrogen stream is configured to be set according to a rated pressure of the system. The flow monitor is arranged on the draw-off pipeline for the dried regenerated gas stream and is located on an upstream side of the pressure monitor and the outlet regulating valve for the product hydrogen stream, and the outlet regulating valve for the product hydrogen stream is selected from a film pneumatic regulating valve. The draw-off pipeline for the product gas stream and the draw-off pipeline for the dried regenerated gas stream converge to form a product header pipeline.

The system further includes a first connection unit, configured to direct the product hydrogen stream produced from the drying tower used as the primary working drying tower. The first connection unit includes a first product hydrogen stream branch, a second product hydrogen stream branch and a third product hydrogen stream branch. An opening on one side of the first product hydrogen stream branch communicates with the first drying tower, an opening on one side of the second product hydrogen stream branch communicates with the second drying tower, and an opening on one side of the third product hydrogen stream branch communicates with the third drying tower. An opening on the other side of the first product hydrogen stream branch, an opening on the other side of the second product hydrogen stream branch and an opening on the other side of the third product hydrogen stream branch respectively communicate with the draw-off pipeline for the product gas stream.

Moreover, the draw-off pipeline for the product gas stream is further provided with an online monitoring apparatus branch, configured to perform online monitoring on the directed product hydrogen stream, so as to evacuate the product hydrogen stream or introduce the product hydrogen stream into a hydrogen storage apparatus according to a monitoring result.

The system further includes a second connection unit, configured to direct the dried regenerated hydrogen stream produced from the drying tower used as the supplemental working drying tower. The second connection unit includes a first regenerated hydrogen stream branch, a second regenerated hydrogen stream branch and a third regenerated hydrogen stream branch.

An opening on one side of the first regenerated hydrogen stream branch communicates with a gas outlet of the first drying tower, an opening on one side of the second regenerated hydrogen stream branch communicates with a gas outlet of the second drying tower, and an opening on one side of the third regenerated hydrogen stream branch communicates with a gas outlet of the third drying tower. An opening on the other side of the first regenerated hydrogen stream branch, an opening on the other side of the second regenerated hydrogen stream branch and an opening on the other side of the third regenerated hydrogen stream branch respectively communicate with the draw-off pipeline for the dried regenerated gas stream.

Moreover, the draw-off pipeline for the dried regenerated gas stream is further provided with an online monitoring apparatus branch, configured to perform online monitoring on the directed dried regenerated hydrogen stream, so as to evacuate the dried regenerated hydrogen stream or introduce the dried regenerated hydrogen stream into a hydrogen storage apparatus according to a monitoring result.

The monitoring apparatus is an online monitoring apparatus, such as an online chromatograph.

The system further includes a third connection unit, configured to separate a portion of regenerated hydrogen stream from the primary working drying tower in the drying working condition to enter the regeneration drying tower in the regeneration working condition.

The third connection unit includes a first regeneration branch, a second regeneration branch, a third regeneration branch and a regenerated hydrogen stream header line.

An opening on one side of the first regeneration branch communicates with the first drying tower, an opening on one side of the second regeneration branch communicates with the second drying tower, and an opening on one side of the third regeneration branch communicates with the third drying tower.

An opening on the other side of the first regeneration branch, an opening on the other side of the second regeneration branch and an opening on the other side of the third regeneration branch respectively communicate with the regenerated hydrogen stream header line. Moreover, the regenerated hydrogen stream header line communicates with the gas outlets of the first drying tower, the second drying tower and the third drying tower, so as to introduce the second portion of the purified hydrogen stream from the primary working drying tower into the regeneration drying tower to reversely blow the adsorbent.

The system includes a deoxygenation apparatus, and a deoxygenated crude hydrogen stream outlet of the deoxygenation apparatus communicates with an inlet of the primary working drying tower. The system further includes a first cooling and separating unit, and a first gas phase outlet of the first cooling and separating unit communicates with the inlet of the primary working drying tower.

The system further includes a working cooling and separating unit, a regeneration cooling and separating unit and a supplemental drying cooling and separating unit. The working cooling and separating unit is configured to cool and separate the stream before being introduced into the primary working drying tower. The regeneration cooling and separating unit is configured to cool and separate the regenerated hydrogen stream produced from the regeneration drying tower. The supplemental drying cooling and separating unit is configured to cool and separate the stream before being introduced into the supplemental working drying tower.

The method for purifying and drying a hydrogen stream by using the above system includes:
a crude hydrogen stream is heated by a pre-heater and then enters a deoxygenation apparatus for a deoxygenation processing to produce a deoxygenated electrolytic hydrogen stream, and the deoxygenated electrolytic hydrogen stream is introduced into the first cooling and separating unit for cooling and separating to produce a first gas phase and a first liquid phase. The first gas phase is introduced into the working cooling and separating unit for cooling and separating to produce a working cooling gas phase and a working cooling liquid phase. The working cooling gas phase is introduced into the working cooling and separating unit for cooling and separating, the produced gas phase is introduced into the first drying tower for a first adsorption processing to produce a purified hydrogen stream, and then the purified hydrogen stream is introduced into the monitoring apparatus for the second monitoring (including micro oxygen and dew point monitoring). According to the second monitoring result, when the purified hydrogen stream does not reach the second preset standard, the purified hydrogen stream is evacuated. In this process, the primary working drying tower continues to operate, and the monitoring apparatus continues to perform the second monitoring on the purified hydrogen stream. When the second monitoring result of the purified hydrogen stream reaches the second preset standard, the purified hydrogen stream is collected as a product hydrogen stream, for example, introduced into a hydrogen storage tank for collection.

When regeneration is performed on the second drying tower, a portion of purified hydrogen stream from the first drying tower is still directed as a product hydrogen stream. A small amount of purified hydrogen stream (10-20 vol% of the total volume of purified hydrogen stream during the operation of the hydrogen production system at the rated power) is introduced into the second drying tower (heating inside the tower) for reverse blowing to implement desorption and regeneration of impurities adsorbed by the adsorbent, and the impurities after desorption flow out with the blown hydrogen (as regenerated hydrogen stream).

The regenerated hydrogen stream is introduced into the regeneration cooling and separating unit for cooling and separating to produce a regenerated hydrogen separated gas phase and a regenerated hydrogen stream separated liquid phase.

The regenerated hydrogen separated gas phase from the regeneration cooling and separating unit is introduced into the supplemental drying cooling and separating unit for separating and cooling to produce a supplemental dried regenerated gas phase and a supplemental dried regenerated liquid phase. The supplemental dried regenerated gas phase is introduced into the third drying tower for a second adsorption processing to remove residual water and gas impurities, so as to produce a dried regenerated hydrogen stream. The dried regenerated hydrogen stream is directed through the draw-off pipeline for the dried regenerated gas stream, and the first monitoring is performed on the dried regenerated hydrogen stream. When the first monitoring result of the dried regenerated hydrogen stream does not reach the first preset standard, the dried regenerated hydrogen stream is evacuated through the draw-off pipeline for the dried regenerated gas stream. When the first monitoring result of the dried regenerated hydrogen stream reaches the first preset standard, the dried regenerated hydrogen stream is stopped evacuating, and the draw-off flow rate of the dried regenerated hydrogen stream is monitored. When the draw-off flow rate of the dried regenerated hydrogen stream is less than the threshold, the opening degree of the flow regulating valve for the regenerated hydrogen stream on the draw-off pipeline for the dried regenerated gas stream is increased, or the opening degree of the flow regulating valve for the regenerated hydrogen stream on the draw-off pipeline for the product gas stream is reduced, so as to increase a flow rate of the regenerated hydrogen stream introduced into the regeneration drying tower. During the operation of the hydrogen production system at the rated power, the draw-off flow threshold of the dried regenerated hydrogen stream is $L_1$ (during the operation of the hydrogen production system at the rated power, the total flow rate of the purified hydrogen stream from the primary working drying tower is L, and the $L_1$ is set to 10-20% of the L), and the flow regulating valve for the regenerated hydrogen stream is regulated to maintain the flow rate of the regenerated hydrogen stream introduced into the regeneration drying tower at 80-120% of the $L_1$.

The hydrogen is continuously processed, and when the first preset switching condition is met, the second drying tower is switched as the primary working drying tower, the third drying tower is switched as the regeneration drying tower, and the first drying tower is switched as the supplemental working drying tower (the regeneration sequence of the first drying tower and the third drying tower can be arbitrarily set, and here, for example, regeneration is first performed on the third drying tower for explanation). As shown in FIG. 1, the second drying tower is used as the primary working drying tower, the third drying tower is used as the regeneration drying tower, and the first drying tower is used as the supplemental working drying tower. Moreover, in this working mode, the specific technological process of the primary working drying tower, the regeneration drying tower and the supplemental working drying tower is the same as the above content, and will not be repeated here.

The hydrogen is continuously processed, and when the second preset switching condition is met, the third drying tower is switched as the primary working drying tower, the first drying tower is switched as the regeneration drying tower, and the second drying tower is switched as the supplemental working drying tower. As shown in FIG. 1, the third drying tower is used as the primary working drying tower, the first drying tower is used as the regeneration drying tower, and the second drying tower is used as the supplemental working drying tower. Moreover, in this working mode, the specific technological process of the primary working drying tower, the regeneration drying tower and the supplemental working drying tower is the same as the above content, and will not be repeated here.

**Embodiment 2**

As shown in FIG. 3, this embodiment provides a system for purifying and drying a hydrogen stream.

The differences between this embodiment and Embodiment 1 include: a crude hydrogen stream is sequentially introduced into a gas-water pre-separator, an external heater and a deoxygenation apparatus, and then introduced into a first cooling and separating unit; and

regenerated hydrogen stream is heated outside towers. The system includes a first heating tower and a second heating tower arranged in parallel. The second portion of the purified hydrogen stream is first heated by an external heating apparatus (one of the first heating tower and the second heating tower), and then enters the regeneration drying tower.

**Embodiment 3**

As shown in FIG. 6, this embodiment provides a system for purifying and drying a hydrogen stream.

The differences between this embodiment and Embodiment 1 include: only a first cooling and separating unit and a regeneration cooling and separating unit are provided; the regenerated hydrogen stream from the regeneration drying tower is introduced into the regeneration cooling and separating unit for cooling and separating to produce a regenerated hydrogen separated gas phase and a regenerated hydrogen stream separated liquid phase; and the regenerated hydrogen separated gas phase is introduced into the supplemental working drying tower for processing to produce the dried regenerated hydrogen stream.

**Embodiment 4**

As shown in FIG. 7, this embodiment provides a system for purifying and drying a hydrogen stream.

The differences between this embodiment and Embodiment 2 include: only a first cooling and separating unit and a regeneration cooling and separating unit are provided; the regenerated hydrogen stream from the regeneration drying tower is introduced into the regeneration cooling and separating unit for cooling and separating to produce a regenerated hydrogen separated gas phase and a regenerated hydrogen stream separated liquid phase; and the regenerated hydrogen separated gas phase is introduced into the supplemental working drying tower for processing to produce the dried regenerated hydrogen stream.

Green electricity hydrogen production is an emerging hydrogen energy production manner that utilizes new energy sources such as solar energy to produce hydrogen. The principle of green electricity hydrogen production is to convert solar energy into electric energy, use electrolysis reaction to decompose water into hydrogen and oxygen to produce the hydrogen, and separate and purify the hydrogen to finally produce high-purity hydrogen. Photovoltaic hydrogen production closely combines two clean energy sources, namely solar energy and hydrogen energy. The green electricity generated by solar energy is used to electrolyze water and produce hydrogen, and the problems of balance of electric power and electricity and consumption in the high proportion of renewable energy grid connection are solved through green electricity hydrogen production.

However, due to the significant fluctuation in day and night loads in photovoltaic electricity generation, photovoltaic electricity generation is used during the day, and only grid electricity can be used at night. In general, a hydrogen production system can basically operate at a full load during the day. The current hydrogen production system can operate stably at a load ranging from 20% to 110%, but cannot meet the requirement for a lower operating load (such as a load lower than 20%) at night. Moreover, at night, only grid electricity can be used to replace photovoltaic electricity generation, but the price of grid electricity is much higher than that of green electricity. In order to reduce the cost of hydrogen production, it is necessary to further improve the hydrogen production system to adapt to stable hydrogen production at a lower load.

The system for purifying and drying a hydrogen stream, as an important subsystem in the hydrogen production system, is usually provided with a product regulating valve in the draw-off pipeline for the product gas stream to regulate the pressure of the purifying and drying system. When a purification load is less than 20%, in order to meet the requirement for regenerated hydrogen stream output, the total purified hydrogen stream is used for the regeneration of the regeneration drying tower. At this time, the product regulating valve cannot regulate the pressure of the purifying and drying system, and the pressure of the system for purifying and drying a hydrogen stream can only be consistent with the pressure of the hydrogen storage tank. Due to the decrease in gas output at night, the pressure of the hydrogen storage tank will gradually decrease, which is not conducive to hydrogen purification and affects the quality of the purified product gas. Therefore, a reliable and effective system for purifying and drying a hydrogen stream is needed to solve the technical problems under purification ultra-low load working conditions.

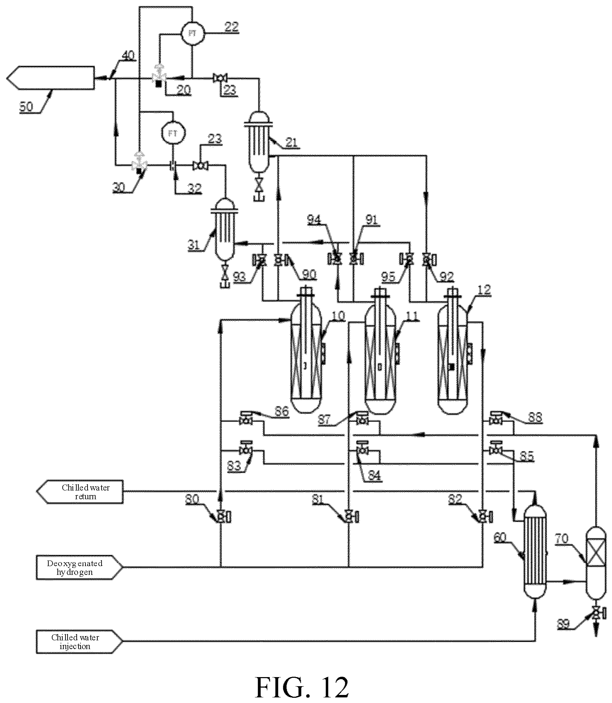

In order to solve the above technical problems, referring to FIG. 12, a first aspect of an embodiment of the present application provides a system for purifying and drying a hydrogen stream, including: at least two drying towers, where the two drying towers include a first drying tower 10 and a second drying tower 11. The system for purifying and drying a hydrogen stream is configured to operate periodically. The system for purifying and drying a hydrogen stream includes a first operating phase and a second operating phase in each operating cycle. The first drying tower 10 and the second drying tower 11 are sequentially and correspondingly used as a primary working drying tower and a regeneration drying tower in turn in each operating phase.

The primary working drying tower is configured to perform an adsorption processing on a crude hydrogen stream produced by a hydrogen production system to produce a purified hydrogen stream.

The system includes a draw-off pipeline for the product gas stream, configured to direct a first portion of the hydrogen in the purified hydrogen stream from the primary working drying tower.

The system includes a regenerated gas stream introduction pipeline, configured to introduce a second portion of the hydrogen in the purified hydrogen stream into the regeneration drying tower. The regeneration drying tower is configured to use the second portion of the hydrogen in the purified hydrogen stream to regenerate an adsorbent of the regeneration drying tower to produce a regenerated hydrogen stream.

The system includes a draw-off pipeline for the dried regenerated gas stream, configured to direct the regenerated hydrogen stream from the regeneration drying tower.

The draw-off pipeline for the product gas stream and/or the draw-off pipeline for the regenerated gas stream is provided with at least one pressure monitor 22.

One of the regenerated gas stream introduction pipeline, the draw-off pipeline for the dried regenerated gas stream and the draw-off pipeline for the product gas stream is respectively provided with a flow regulating valve for the regenerated hydrogen stream 30 and a flow monitor 32. The flow regulating valve for the regenerated hydrogen stream 30 is electrically connected to the flow monitor 32. The flow regulating valve for the regenerated hydrogen stream 30 is electrically connected to the at least one pressure monitor 22.

Specifically, the system for purifying and drying a hydrogen stream includes at least two drying towers, where the two drying towers include a first drying tower 10 and a second drying tower 11, and the two drying towers are conventional drying towers in the art and have the same structure. The crude hydrogen stream produced from the hydrogen production system enters the system for purifying and drying a hydrogen stream for processing. The system for purifying and drying a hydrogen stream is configured to periodically operate. Each operating cycle is divided into a first operating phase and a second operating phase. The first drying tower 10 and the second drying tower 11 are sequentially used as the primary working drying tower and the regeneration drying tower in turn in the first operating phase and the second operating phase. For example, in the first operating phase, the first drying tower 10 is used as the primary working drying tower, and the second drying tower 11 is used as the regeneration drying tower; and in the second operating phase, the second drying tower 11 is used as the primary working drying tower, and the first drying tower 10 is used as the regeneration drying tower.

A molecular sieve inside the primary working drying tower performs an adsorption processing on the crude hydrogen stream produced by the hydrogen production system to produce a purified hydrogen stream. The purified hydrogen stream is divided into a first portion of hydrogen and a second portion of hydrogen. The first portion of hydrogen accounts for about 80% of the total mass of the purified hydrogen stream. The primary working drying tower communicates with a draw-off pipeline for the product gas stream, configured to direct the first portion of the hydrogen inside the primary working drying tower and introduce the first portion of the hydrogen into a hydrogen storage tank 50. The draw-off pipeline for the product gas stream communicates with a regenerated gas stream introduction pipeline, configured to direct the second portion of the hydrogen inside the primary working drying tower and introduce the second portion of the hydrogen into the regeneration drying tower.

The second portion of hydrogen inside the regeneration drying tower is used to regenerate the adsorbent inside the regeneration drying tower, so as to produce a regenerated hydrogen stream and a regenerated adsorbent. The regeneration drying tower communicates with a draw-off pipeline for the dried regenerated gas stream. The draw-off pipeline for the dried regenerated gas stream is configured to direct the regenerated hydrogen stream from the regeneration drying tower and introduce the regenerated hydrogen stream into a hydrogen evacuating device or the hydrogen storage tank 50.

It should be noted that a regeneration draw-off pipeline refers to a pipeline between the regeneration drying tower and the hydrogen evacuating device or the hydrogen storage tank 50. The regeneration draw-off pipeline can directly direct the regenerated hydrogen stream inside the regeneration drying tower into the hydrogen evacuating device, and then the regenerated hydrogen stream is discharged into a suitable space such as the atmosphere. Or, in the process of directing the regenerated hydrogen stream inside the regeneration drying tower, the regenerated hydrogen stream is dried through a processing device such as a third drying tower 12, and then the dried hydrogen is directed into the hydrogen evacuating device or the hydrogen storage tank 50 through the regeneration draw-off pipeline.

It can be understood that the first portion of the hydrogen inside the product draw-off pipeline and the regenerated hydrogen stream inside the draw-off pipeline for the dried regenerated gas stream are both introduced into the hydrogen evacuating device or the hydrogen storage tank 50. Therefore, the product draw-off pipeline and the draw-off pipeline for the dried regenerated gas stream converge together and communicate with a product header pipeline 40, and the product header pipeline 40 communicates with the hydrogen evacuating device or the hydrogen storage tank 50. The first portion of hydrogen and the regenerated hydrogen stream are both introduced into the same hydrogen evacuating device or hydrogen storage tank 50 through the product header pipeline 40.

The system for purifying and drying a hydrogen stream provided in this embodiment of the present application can determine a regulation control manner of the flow regulating valve for the regenerated hydrogen stream 30 according to an operating load situation of the system for purifying and drying a hydrogen stream. The operating load of the system for purifying and drying a hydrogen stream can be monitored and calculated according to a PLC (Programmable Logic Controller) or a DCS (Distributed Control System). The operating load of the system for purifying and drying a hydrogen stream is a ratio of a gas transmission capacity of a front end of the system for purifying and drying a hydrogen stream to a processing capacity of the system for purifying and drying a hydrogen stream. The gas transmission capacity of the front end of the system for purifying and drying a hydrogen stream can be automatically calculated by a current method. A calculation formula is as follows:

$$Q=In\eta/2390,$$

where Q represents hydrogen output, and the unit is cubic meter per hour ($m^3/h$); I represents a current passing through an electrolytic cell, and the unit is ampere (A); n represents the number of cells in an electrolytic tank; and $\eta$ represents current efficiency, and the unit is %.

One of the regenerated gas stream introduction pipeline, the draw-off pipeline for the dried regenerated gas stream and the draw-off pipeline for the product gas stream is respectively provided with a flow regulating valve for the regenerated hydrogen stream 30 and a flow monitor 32. The flow monitor 32 can acquire gas flow information on the corresponding pipeline. For example, the flow monitors 32 on the regenerated gas stream introduction pipeline and the draw-off pipeline for the dried regenerated gas stream can acquire the flow rate of the regenerated hydrogen stream in real time. For another example, the flow monitor 32 on the product draw-off pipeline can acquire the flow rate of the product hydrogen stream in real time. The flow regulating valve for the regenerated hydrogen stream 30 is electrically connected to the flow monitor 32. According to the gas flow information acquired in real time by the flow monitor 32, an opening degree of the flow regulating valve for the regenerated hydrogen stream 30 is regulated to enable the flow rate of the regenerated hydrogen stream acquired in real time to reach a regenerated hydrogen stream flow rated value. The regenerated hydrogen stream flow rated value generally accounts for 10-20% of the total flow rate of the product hydrogen stream produced from the product header pipeline 40.

The draw-off pipeline for the product gas stream and/or the draw-off pipeline for the regenerated gas stream is provided with at least one pressure monitor 22, and the flow regulating valve for the regenerated hydrogen stream 30 is electrically connected to the at least one pressure monitor 22. The pressure monitors 22 arranged on the draw-off pipeline for the dried regenerated gas stream and/or the draw-off pipeline for the product gas stream can acquire a pressure value of the system for purifying and drying a hydrogen stream in real time. An opening degree of the flow regulating valve for the regenerated hydrogen stream 30 is determined according to a pressure rated value of the system for purifying and drying a hydrogen stream and the pressure value of the system for purifying and drying a hydrogen stream acquired in real time, so as to enable the pressure value of the system for purifying and drying a hydrogen stream acquired in real time to reach the pressure rated value of the system for purifying and drying a hydrogen stream.

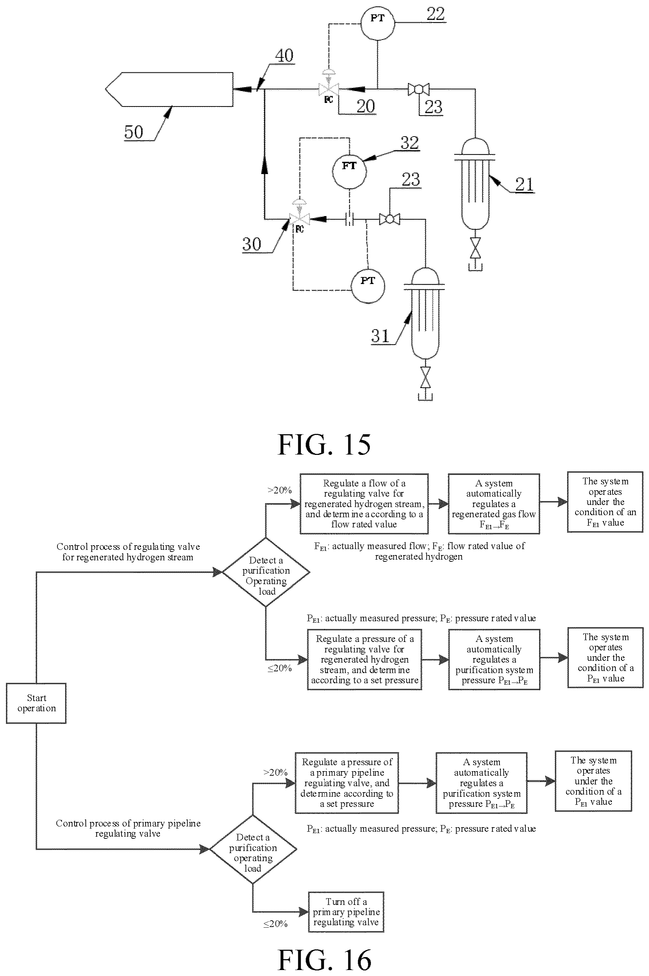

As shown in FIG. 16, when the operating load of the system for purifying and drying a hydrogen stream is greater than a load threshold which is generally configured to be 10% to 20%, and preferably 20%, the flow regulating valve for the regenerated hydrogen stream 30 determines the opening degree of the flow regulating valve for the regenerated hydrogen stream 30 based on the regenerated hydrogen stream flow rated value. By regulating the opening degree of the flow regulating valve for the regenerated hydrogen stream 30, an actual flow $F_{E1}$ of the regenerated hydrogen stream reaches a regenerated hydrogen stream flow rated value $F_E$, and the flow rate of the regenerated hydrogen stream in the system for purifying and drying a hydrogen stream is maintained at $F_E$ for stable operation. The flow rate of the regenerated hydrogen stream inside the draw-off pipeline for the dried regenerated gas stream is generally the same as the flow rate of the regenerated hydrogen stream inside the regenerated gas stream introduction pipeline. The regenerated hydrogen stream flow rated value $F_E$ generally accounts for 10% to 20% of the hydrogen flow rate of the product header pipeline 40. Correspondingly, the flow rated value on the draw-off pipeline for the product gas stream accounts for 90% to 80% of the hydrogen flow rate of the product header pipeline 40, and the sum of the regenerated hydrogen stream flow rated value and the product hydrogen stream flow rated value on the draw-off pipeline for the product gas stream is 100%.

As shown in FIG. 16, when the operating load of the system for purifying and drying a hydrogen stream is less than or equal to the load threshold such as 20%, the flow regulating valve for the regenerated hydrogen stream 30 determines the opening degree of the flow regulating valve for the regenerated hydrogen stream 30 based on the pressure rated value of the system for purifying and drying a hydrogen stream, that is, under a low-load operating condition, the flow regulating valve for the regenerated hydrogen stream 30 is switched from flow regulation to pressure regulation. By regulating the opening degree of the flow regulating valve for the regenerated hydrogen stream 30, an actual pressure $P_{E1}$ of the system for purifying and drying a hydrogen stream reaches a pressure rated value $P_E$, and the system for purifying and drying a hydrogen stream operates stably at the $P_E$.

According to the system for purifying and drying a hydrogen stream provided in the present application, a manner of controlling a purification pressure and a regenerated hydrogen stream flow can be changed according to a change of an operating load thereof, so as to achieve stable operation of the system for purifying and drying a hydrogen stream at a low load.

In some embodiments, the flow regulating valve for the regenerated hydrogen stream 30 is arranged on the regenerated gas stream introduction pipeline and/or the draw-off pipeline for the dried regenerated gas stream, and the flow monitor 32 is arranged on the regenerated gas stream introduction pipeline and/or the draw-off pipeline for the dried regenerated gas stream.

Specifically, the flow regulating valve for the regenerated hydrogen stream 30 and the flow monitor 32 can be arranged in various combination manners. For example, the flow regulating valve for the regenerated hydrogen stream 30 and the flow monitor 32 are both arranged on the regenerated gas stream introduction pipeline; or, the flow regulating valve for the regenerated hydrogen stream 30 and the flow monitor 32 are both arranged on the draw-off pipeline for the dried regenerated gas stream (as shown in FIG. 12 to FIG. 14); or, the flow regulating valve for the regenerated hydrogen stream 30 is arranged on the regenerated gas stream introduction pipeline, and the flow monitor 32 is arranged on the draw-off pipeline for the dried regenerated gas stream; or, the flow regulating valve for the regenerated hydrogen stream 30 is arranged on the draw-off pipeline for the dried regenerated gas stream, and the flow monitor 32 is arranged on the regenerated gas stream introduction pipeline; or, the flow regulating valve for the regenerated hydrogen stream 30 is respectively arranged on the regenerated gas stream introduction pipeline and the draw-off pipeline for the dried regenerated gas stream, and the flow monitor 32 is arranged on the regenerated gas stream introduction pipeline and/or the draw-off pipeline for the dried regenerated gas stream.

The flow monitor 32 is electrically connected to the flow regulating valve for the regenerated hydrogen stream 30 through a controller. The flow information of the regenerated hydrogen stream produced by the flow monitor 32 is transmitted to the controller through a wire. The controller performs comparative analysis according to the flow information of the regenerated hydrogen stream produced by the flow monitor 32 and the regenerated hydrogen stream flow rated value preset inside. The controller transmits the control information to a locator of the flow regulating valve for the regenerated hydrogen stream 30 through a wire according to an analysis result, so that the flow regulating valve for the regenerated hydrogen stream 30 performs a corresponding operation, and an opening degree of the flow regulating valve for the regenerated hydrogen stream 30 is determined. Exemplarily, if the flow rate of the regenerated hydrogen stream produced by the flow monitor 32 is less than the regenerated hydrogen stream flow rated value, the opening degree of the flow regulating valve for the regenerated hydrogen stream 30 is increased; otherwise, the opening degree of the flow regulating valve for the regenerated hydrogen stream 30 is reduced.

The flow monitor 32 arranged on the regenerated gas stream introduction pipeline and/or the draw-off pipeline for the dried regenerated gas stream can acquire the flow rate of the regenerated hydrogen stream in real time. The controller determines the opening degree of the flow regulating valve for the regenerated hydrogen stream 30 according to the regenerated hydrogen stream flow rated value on the regenerated gas stream introduction pipeline and/or the draw-off pipeline for the dried regenerated gas stream and the flow rate of the regenerated hydrogen stream acquired in real time, so as to enable the flow rate of the regenerated hydrogen stream acquired in real time to reach the regenerated hydrogen stream flow rated value. The regenerated hydrogen stream flow rated value generally accounts for 20% of the total flow rate of the product hydrogen stream produced from the product header pipeline 40.

In some embodiments, the flow regulating valve for the regenerated hydrogen stream 30 is arranged on the regenerated gas stream introduction pipeline and/or the draw-off pipeline for the dried regenerated gas stream, and the flow monitor 32 is arranged on the draw-off pipeline for the product gas stream.

Specifically, the flow regulating valve for the regenerated hydrogen stream 30 and the flow monitor 32 can also be arranged in the following manner: the flow regulating valve for the regenerated hydrogen stream 30 is arranged on the regenerated gas stream introduction pipeline, and the flow monitor 32 is arranged on the draw-off pipeline for the product gas stream; or, the flow regulating valve for the regenerated hydrogen stream 30 is arranged on the draw-off pipeline for the dried regenerated gas stream, and the flow monitor 32 is arranged on the draw-off pipeline for the product gas stream; or, the flow regulating valve for the regenerated hydrogen stream 30 is arranged on the draw-off pipeline for the dried regenerated gas stream and the regenerated gas stream introduction pipeline, and the flow monitor 32 is arranged on the draw-off pipeline for the product gas stream.

The draw-off pipeline for the product gas stream is provided with a flow monitor 32. The flow monitor 32 acquires the flow rate of the product hydrogen stream on the draw-off pipeline for the product gas stream in real time. The flow monitor 32 on the draw-off pipeline for the product gas stream is electrically connected to the flow regulating valve for the regenerated hydrogen stream 30 through a controller. The flow information of the product hydrogen stream produced by the flow monitor 32 is transmitted to the controller through a wire. The controller performs comparative analysis according to the flow information of the product hydrogen stream produced by the flow monitor 32 and the regenerated hydrogen stream flow rated value preset inside. The controller transmits the control information to the locator of the flow regulating valve for the regenerated hydrogen stream 30 through a wire according to an analysis result, so that the flow regulating valve for the regenerated hydrogen stream 30 performs a corresponding operation, and an opening degree of the flow regulating valve for the regenerated hydrogen stream 30 is determined. Exemplarily, if the regenerated hydrogen stream flow rated value is 20%, the product hydrogen stream flow rated value on the draw-off pipeline for the product gas stream is 80%. When the flow rate of the product hydrogen stream produced by the flow monitor 32 is less than the product hydrogen stream flow rated value, the opening degree of the flow regulating valve for the regenerated hydrogen stream 30 is reduced; otherwise, the opening degree of the flow regulating valve for the regenerated hydrogen stream 30 is increased. The opening degree of the flow regulating valve for the regenerated hydrogen stream 30 is regulated to enable the flow rate of the product hydrogen stream acquired in real time on the draw-off pipeline for the product gas stream to reach 75%.

In this embodiment of the present application, the sum of the flow rate of the regenerated hydrogen stream on the draw-off pipeline for the dried regenerated gas stream or the regenerated gas stream introduction pipeline and the flow rate of the product hydrogen stream on the draw-off pipeline for the product gas stream is equal to the total flow rate of the product hydrogen stream on the product header pipeline 40. There are two manners of regulating the flow rate of the regenerated hydrogen stream on the draw-off pipeline for the dried regenerated gas stream: (1) the opening degree of the flow regulating valve for the regenerated hydrogen stream 30 is determined based on the flow monitor 32 arranged on the draw-off pipeline for the product gas stream; and (2) the opening degree of the flow regulating valve for the regenerated hydrogen stream 30 is determined based on the flow monitor 32 arranged on the draw-off pipeline for the dried regenerated gas stream or the regenerated gas stream introduction pipeline. Those skilled in the art can select the arrangement position of the flow monitor 32 according to actual needs. When the operating load of the system for purifying and drying a hydrogen stream is greater than a load threshold such as 20%, by regulating the opening degree of the flow regulating valve for the regenerated hydrogen stream 30, the actual flow rate of the regenerated hydrogen stream on the draw-off pipeline for the dried regenerated gas stream or the regenerated gas stream introduction pipeline can reach the regenerated hydrogen stream flow rated value, and the flow rate of the regenerated hydrogen stream in the system for purifying and drying a hydrogen stream is always maintained at the flow rated value, thereby maintaining the stable operation of the system for purifying and drying a hydrogen stream.

In some embodiments, the draw-off pipeline for the product gas stream is provided with a product regulating valve 20, and the pressure monitor 22 is electrically connected to the product regulating valve 20.

Specifically, as shown in FIG. 12 to FIG. 15, the pressure monitor 22 is arranged on the draw-off pipeline for the product gas stream or the draw-off pipeline for the dried regenerated gas stream, the draw-off pipeline for the product gas stream is provided with a product regulating valve 20, and the product regulating valve 20 is electrically connected to the pressure monitor 22 through a controller. The pressure value information of the system for purifying and drying a hydrogen stream acquired in real time by the pressure monitor 22 is transmitted to the controller through a wire. The controller performs comparative analysis according to the pressure value information of the system for purifying and drying a hydrogen stream produced by the pressure monitor 22 and the pressure rated value of the system for purifying and drying a hydrogen stream preset inside. The controller transmits the control information to a locator of the product regulating valve 20 through a wire according to an analysis result, so that the product regulating valve 20 performs a corresponding operation, and an opening degree of the product regulating valve 20 is determined.

It should be noted that the pressure monitor 22 is electrically connected to the product regulating valve 20 and the flow regulating valve for the regenerated hydrogen stream 30 respectively through the controller. Therefore, the control information of the controller can also be transmitted to the locator of the flow regulating valve for the regenerated hydrogen stream 30, so that the flow regulating valve for the regenerated hydrogen stream 30 performs a corresponding operation, and the opening degree of the flow regulating valve for the regenerated hydrogen stream 30 is determined.

When the operating load of the system for purifying and drying a hydrogen stream is greater than the load threshold, the opening degree of the flow regulating valve for the regenerated hydrogen stream 30 is determined based on the regenerated hydrogen stream flow rated value, and the opening degree of the product regulating valve 20 is determined based on the rated pressure value of the system for purifying and drying a hydrogen stream. When the operating load of the system for purifying and drying a hydrogen stream is not greater than the load threshold, the opening degree of the flow regulating valve for the regenerated hydrogen stream 30 is determined based on the pressure rated value of the system for purifying and drying a hydrogen stream, and the product regulating valve 20 is turned off. The stable operation of the system for purifying and drying a hydrogen stream under different operating loads is achieved through the coordination of the flow monitor 32, the pressure monitor 22, the flow regulating valve for the regenerated hydrogen stream 30 and the product regulating valve 20.

The draw-off pipeline for the dried regenerated gas stream or the regenerated gas stream introduction pipeline is provided with the flow regulating valve for the regenerated hydrogen stream 30, and the draw-off pipeline for the product gas stream is provided with the product regulating valve 20. In order to ensure that the flow ranges of the flow regulating valve for the regenerated hydrogen stream 30 and the product regulating valve 20 are within optimal regulation ranges thereof, the product regulating valve 20 is set according to the product hydrogen stream flow rated value on the draw-off pipeline for the product gas stream, and the flow regulating valve for the regenerated hydrogen stream 30 is set according to the regenerated hydrogen stream flow rated value on the draw-off pipeline for the dried regenerated gas stream or the regenerated gas stream introduction pipeline. Due to the fact that the flow rate of the regenerated hydrogen stream is less than 20% of the total gas output at the rated power, during selection of the product regulating valve 20 and the flow regulating valve for the regenerated hydrogen stream 30, an optimal flow range of the product regulating valve 20 is greater than an optimal flow range of the flow regulating valve for the regenerated hydrogen stream 30. Exemplarily, the flow rate of the product regulating valve 20 is 80% of a rated gas processing capacity, and the flow rate of the flow regulating valve for the regenerated hydrogen stream 30 is 20% of the rated gas processing capacity, where the rated gas processing capacity is the capacity of hydrogen that can be processed by the system for purifying and drying a hydrogen stream.

Exemplarily, the draw-off pipeline for the regenerated gas stream is provided with a flow monitor 32 and a flow regulating valve for the regenerated hydrogen stream 30, and the flow monitor 32 is electrically connected to the flow regulating valve for the regenerated hydrogen stream 30 through a controller. The draw-off pipeline for the product gas stream is provided with a pressure monitor 22 and a product regulating valve 20 that are electrically connected, and the pressure monitor 22 is electrically connected to the product regulating valve 20 through the controller. The regenerated hydrogen stream is dried by a supplemental drying tower, then passes through a draw-off pipeline for the dried regenerated gas stream, is filtered by a regenerated hydrogen stream filter 31, and then is directly output into the hydrogen storage tank. Moreover, the draw-off pipeline for the regenerated gas stream is provided with the flow monitor 32 and the flow regulating valve for the regenerated hydrogen stream 30 that are independent of each other and are designed in parallel with the product regulating valve 20 and the pressure monitor 22 on the draw-off pipeline for the product gas stream, thereby flexibly regulating the flow rate of the regenerated hydrogen stream from the regeneration drying tower. The draw-off pipeline for the product gas stream controls the pressure of the system for purifying and drying a hydrogen stream based on the pressure monitor 22 and the product regulating valve 20. The draw-off pipeline for the dried regenerated gas stream regulates the flow rate of the regenerated hydrogen stream inside the draw-off pipeline for the dried regenerated gas stream based on the flow monitor 32 and the flow regulating valve for the regenerated hydrogen stream 30. The flow rate of the regenerated hydrogen stream on the draw-off pipeline for the dried regenerated gas stream can be specifically monitored by the flow monitor 32, and the flow rate of the regenerated hydrogen stream introduced into the regeneration drying tower is increased by increasing the opening degree of the flow regulating valve for the regenerated hydrogen stream 30 on the draw-off pipeline for the dried regenerated gas stream or reducing the opening degree of the product regulating valve 20 on the draw-off pipeline for the product gas stream. When the operating power of the hydrogen production system is relatively low, the gas flow rate of the regenerated gas stream pipeline is preferentially ensured, the regeneration effect of the drying tower is ensured, the normal operation of the entire system for purifying and drying a hydrogen stream is ensured, and product gas with a qualified gas dew point is output. The present application can effectively adapt to power fluctuation of hydrogen output in renewable energy-based hydrogen production, ensuring the normal operation of the system for purifying and drying a hydrogen stream.

It should be noted that in this example, the pressure monitor 22 on the draw-off pipeline for the product gas stream is further electrically connected to the flow regulating valve for the regenerated hydrogen stream 30 (as shown in FIG. 12 to FIG. 14), or the pressure monitor 22 on the draw-off pipeline for the dried regenerated gas stream is electrically connected to the flow regulating valve for the regenerated hydrogen stream 30 (as shown in FIG. 15). When the operating load of the system for purifying and drying a hydrogen stream is lower than 20%, the product regulating valve 20 is turned off, so that the flow regulating valve for the regenerated hydrogen stream 30 is controlled by pressure but not controlled by flow.

It can be understood that in the first operating phase and the second operating phase of the system for purifying and drying a hydrogen stream, the product regulating valve 20 is always in a turned-on state.

In some embodiments, the flow monitor 32 is electrically connected to the product regulating valve 20.

Specifically, one of the draw-off pipeline for the product gas stream, the draw-off pipeline for the dried regenerated gas stream and the regenerated gas stream introduction pipeline is provided with a flow monitor 32, and the flow monitor 32 is electrically connected to the product regulating valve 20 through a controller. The flow information of the gas (regenerated hydrogen stream or product hydrogen stream) acquired by the flow monitor 32 is transmitted to the controller through a wire. The controller performs comparative analysis according to the gas flow information acquired by the flow monitor 32 and the regenerated hydrogen stream flow rated value or the product hydrogen stream flow rated value preset inside. The controller transmits the control information to the locator of the product regulating valve 20 through a wire according to an analysis result, so that the product regulating valve 20 performs a corresponding operation. Exemplarily, when the operating load of the system for purifying and drying a hydrogen stream is greater than the preset threshold, the opening degree of the product regulating valve 20 is determined based on the regenerated hydrogen stream flow rated value or the product hydrogen stream flow rated value, so that the flow rate of the product hydrogen stream inside the product draw-off pipeline reaches the product hydrogen stream flow rated value, and the flow rate of the regenerated hydrogen stream inside the regenerated draw-off pipeline or the regenerated introduction pipeline reaches the regenerated hydrogen stream flow rated value.

In some embodiments, as shown in FIG. 12 to FIG. 14, the flow regulating valve for the regenerated hydrogen stream 30 is arranged on the regenerated gas stream introduction pipeline and/or the draw-off pipeline for the dried regenerated gas stream, and the flow monitor 32 is arranged on the regenerated gas stream introduction pipeline and/or the draw-off pipeline for the dried regenerated gas stream. The pressure monitor 22 is arranged on the draw-off pipeline for the product gas stream.

Specifically, the flow regulating valve for the regenerated hydrogen stream 30 is arranged on the regenerated gas stream introduction pipeline and/or the draw-off pipeline for the dried regenerated gas stream, and the flow regulating valve for the regenerated hydrogen stream 30 can regulate the flow rate of the regenerated hydrogen stream or regulate the pressure of the system for purifying and drying a hydrogen stream.

The flow monitor 32 is arranged on the regenerated gas stream introduction pipeline and/or the draw-off pipeline for the dried regenerated gas stream. The flow monitor 32 can acquire the flow rate of the regenerated hydrogen stream in real time. The pressure monitor 22 is arranged on the draw-off pipeline for the product gas stream. The product regulating valve 20 can regulate the flow rate of the product hydrogen stream or regulate the pressure of the system for purifying and drying a hydrogen stream in real time.

The pressure monitor 22 on the draw-off pipeline for the product gas stream is electrically connected to both the product regulating valve 20 and the flow regulating valve for the regenerated hydrogen stream 30. When the operating load of the system for purifying and drying a hydrogen stream is greater than a load threshold (such as 20%), the product regulating valve 20 determines the opening degree of the product regulating valve 20 based on the pressure rated value of the system for purifying and drying a hydrogen stream; otherwise, the product regulating valve 20 is in a turned-off state, so that the flow regulating valve for the regenerated hydrogen stream 30 is controlled by pressure but not controlled by flow.

As shown in FIG. 16, during the operation and movement starting of the system for purifying and drying a hydrogen stream, the control logic of the flow regulating valve for the regenerated hydrogen stream 30 is as follows:

when the operating load of the system for purifying and drying a hydrogen stream is greater than a load threshold such as 20%, by regulating the opening degree of the flow regulating valve for the regenerated hydrogen stream 30, an actual flow $F_{E1}$ of the regenerated hydrogen stream can reach a regenerated hydrogen stream flow rated value $F_E$, and the flow rate of the regenerated hydrogen stream in the system for purifying and drying a hydrogen stream is always maintained at a flow rated value $F_E$ ($F_E=F_{E1}$), thereby maintaining the stable operation of the system for purifying and drying a hydrogen stream.

When the operating load of the system for purifying and drying a hydrogen stream is not greater than the load threshold such as 20%, the opening degree of the flow regulating valve for the regenerated hydrogen stream 30 can be regulated to maintain the pressure of the system for purifying and drying a hydrogen stream at the pressure rated value, thereby maintaining the stable operation of the system for purifying and drying a hydrogen stream. That is, under a low-load operating condition, the flow regulating valve for the regenerated hydrogen stream 30 is switched from flow regulation to pressure regulation. By regulating the opening degree of the flow regulating valve for the regenerated hydrogen stream 30, the actual pressure $P_{E1}$ of the system for purifying and drying a hydrogen stream reaches the pressure rated value $P_E$, and the system for purifying and drying a hydrogen stream operates stably at the $P_E$ ($P_E=P_{E1}$).

The control logic of the product regulating valve 20 is as follows:

when the operating load of the system for purifying and drying a hydrogen stream is greater than the load threshold such as 20%, the pressure value of the system for purifying and drying a hydrogen stream is acquired in real time through the pressure monitor 22 on the draw-off pipeline for the product gas stream; and by regulating the opening degree of the product regulating valve 20, the actual pressure $P_{E1}$ of the system for purifying and drying a hydrogen stream reaches the pressure rated value $P_E$, and the system for purifying and drying a hydrogen stream operates stably at the $P_E$ ($P_E=P_{E1}$).

When the operating load of the system for purifying and drying a hydrogen stream is not greater than the load threshold such as 20%, the product regulating valve 20 is turned off.

In this embodiment of the present application, when the operating load of the system for purifying and drying a hydrogen stream is greater than 20%, the pressure of the system for purifying and drying a hydrogen stream is controlled through the product regulating valve 20, and the flow rate of the regenerated hydrogen stream is controlled through the flow regulating valve for the regenerated hydrogen stream 30. When the operating load is less than or equal to 20%, the product regulating valve 20 is turned off, the flow regulating valve for the regenerated hydrogen stream 30 is switched from flow regulation control to pressure regulation control, the pressure of the system is controlled by the flow regulating valve for the regenerated hydrogen stream 30, and all hydrogen passes through the regenerated gas stream introduction pipeline and the draw-off pipeline for the dried regenerated gas stream, thereby achieving the stable operation of the system for purifying and drying a hydrogen stream at a low load. The system for purifying and drying a hydrogen stream can meet the control requirements of the system for purifying and drying a hydrogen stream under an ultra-low load working condition by using two self-configured regulating valves (the flow regulating valve for the regenerated hydrogen stream 30 and the product regulating valve 20), thereby reducing the number of valves and simplifying the control process.

In some embodiments, the system for purifying and drying a hydrogen stream further includes a third drying tower 12, and the system for purifying and drying a hydrogen stream includes a first operating phase, a second operating phase and a third operating phase in each operating cycle. The third drying tower 12 is used as the supplemental working drying tower, and the first drying tower 10, the second drying tower 11 and the third drying tower 12 are sequentially and correspondingly used as the primary working drying tower, the supplemental working drying tower and the regeneration drying tower in turn in each operating phase. The supplemental working drying tower is configured to perform an adsorption processing on the regenerated hydrogen stream produced from the regeneration drying tower to produce a dried regenerated hydrogen stream.

Specifically, as shown in FIG. 12 to FIG. 14, the system for purifying and drying a hydrogen stream includes a first operating phase, a second operating phase and a third operating phase in each operating cycle. The first drying tower 10, the second drying tower 11 and the third drying tower 12 are sequentially and correspondingly used as the primary working drying tower, the supplemental working drying tower and the regeneration drying tower in turn in each operating phase. Each operating cycle is operated repeatedly to achieve cyclic purification and drying of hydrogen, thereby improving the purity and purification efficiency of hydrogen.

As shown in FIG. 12, the system for purifying and drying a hydrogen stream in the present application structurally includes: a first drying tower 10, a second drying tower 11 and a third drying tower 12. An output end of the hydrogen production system is deoxygenated by a deoxygenator and then condensed by a condenser, and then communicates with the first drying tower 10, the second drying tower 11 and the third drying tower 12 respectively. Specifically, an output end of the condenser directly communicates with the corresponding first drying tower 10, second drying tower 11 and third drying tower 12 respectively through a first valve 80, a second valve 81 and a third valve 82. A pipeline between the first valve 80 and the first drying tower 10 communicates with a gas cooler 60 through a fourth valve 83, a pipeline between the second valve 81 and the second drying tower 11 communicates with the gas cooler 60 through a fifth valve 84, and a pipeline between the third valve 82 and the third drying tower 12 communicates with the gas cooler 60 through a sixth valve 85. A pipeline between the fourth valve 83 and the first drying tower 10 communicates with a gas-water separator 70 through a seventh valve 86, a pipeline between the fifth valve 84 and the second drying tower 11 communicates with the gas-water separator 70 through an eighth valve 87, and a pipeline between the sixth valve 85 and the third drying tower 12 communicates with the gas-water separator 70 through a ninth valve 88. The gas cooler 60 directly communicates with the gas-water separator 70. The gas cooler 60 has a chilled water inlet and a chilled water return outlet. An outlet end of the gas-water separator 70 is provided with a tenth valve 89 for the discharge of liquid. The first drying tower 10, the second drying tower 11 and the third drying tower 12 communicate with the draw-off pipeline for the product gas stream respectively through an eleventh valve 90, a twelfth valve 91 and a thirteenth valve 92, and the draw-off pipeline for the product gas stream communicates with the product header pipeline 40 through a primary pipeline hydrogen filter 21. The first drying tower 10, the second drying tower 11 and the third drying tower 12 communicate with the draw-off pipeline for the dried regenerated gas stream respectively through a fourteenth valve 93, a fifteenth valve 94 and a sixteenth valve 95, the draw-off pipeline for the dried regenerated gas stream communicates with the product header pipeline 40 through the regenerated hydrogen stream filter 31, and the product header pipeline 40 communicates with the hydrogen storage tank 50. A pipeline between the regenerated hydrogen stream filter 31 and the product header pipeline 40 is provided with the flow regulating valve for the regenerated hydrogen stream 30.

In some embodiments, as shown in FIG. 12 to FIG. 14, the draw-off pipeline for the dried regenerated gas stream includes a regenerated gas stream draw-off branch for directing the dried regenerated hydrogen stream from the supplemental working drying tower.

Specifically, the product draw-off pipeline, the regenerated gas stream introduction pipeline, the draw-off pipeline for the dried regenerated gas stream and the regenerated gas stream draw-off branch in the present application are introduced according to each phase of operation of the system for purifying and drying a hydrogen stream.

Exemplarily, as shown in FIG. 12, in the first operating phase, the first drying tower 10 is used as the primary working drying tower, the second drying tower 11 is used as the supplemental working drying tower, and the third drying tower 12 is used as the regeneration drying tower. The first drying tower 10 is directly connected to the primary pipeline hydrogen filter 21 through the product draw-off pipeline, and the product draw-off pipeline between the first drying tower 10 and the primary pipeline hydrogen filter 21 is provided with the eleventh valve 90. A regenerated hydrogen stream introduction pipeline communicating with the product draw-off pipeline communicates between the primary pipeline hydrogen filter 21 and the third drying tower 12, and the regenerated hydrogen stream introduction pipeline is provided with the thirteenth valve 92. The draw-off pipeline for the dried regenerated gas stream is arranged between the third drying tower 12 and the regenerated hydrogen stream filter 31, and the draw-off pipeline for the dried regenerated gas stream on the side close to the third drying tower 12 is provided with the sixteenth valve 95. The third drying tower 12 can also communicate with the gas cooler 60, the gas-water separator 70 and the second drying tower 11 through the regenerated gas stream draw-off branch, and then is connected to the regenerated hydrogen stream filter 31 through the draw-off pipeline for the dried regenerated gas stream. That is, the regenerated gas stream draw-off branch is a portion of the draw-off pipeline for the dried regenerated gas stream, and the side of the regenerated gas stream draw-off branch close to the second drying tower 11 is provided with the fifteenth valve 94. After the crude hydrogen stream produced by the hydrogen production system is deoxygenated by the deoxygenator and condensed by the condenser, deoxygenated hydrogen is produced and enters the first drying tower 10 for a molecular sieve adsorption processing. The produced purified hydrogen stream is divided into two portions, where a portion of hydrogen (80%) enters the primary pipeline hydrogen filter 21 and then enters the hydrogen storage tank 50; and the other portion of hydrogen (20%) used as the regenerated hydrogen stream first enters the third drying tower 12 for desorption of the molecular sieve in the third drying tower 12 and then passes through the gas cooler 60 and the gas-water separator 70 to enter the second drying tower 11 for absorption of the water in the regenerated hydrogen stream, and the hydrogen adsorbed by the second drying tower 11 enters the regenerated hydrogen stream filter 31 and then is merged into the product header pipeline 40 to enter the hydrogen storage tank 50.

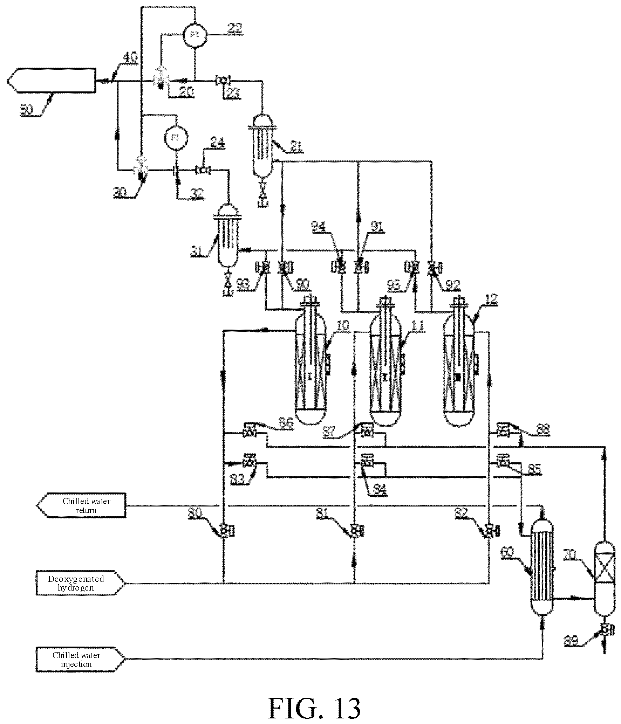

As shown in FIG. 13, in the second operating phase, the first drying tower 10 is used as the regeneration drying tower, the second drying tower 11 is used as the primary working drying tower, and the third drying tower 12 is used as the supplemental working drying tower. The second drying tower 11 is directly connected to the primary pipeline hydrogen filter 21 through the product draw-off pipeline, and the product draw-off pipeline between the second drying tower 11 and the primary pipeline hydrogen filter 21 is provided with the twelfth valve 91. A regenerated hydrogen stream introduction pipeline communicating with the product draw-off pipeline communicates between the primary pipeline hydrogen filter 21 and the first drying tower 10, and the regenerated hydrogen stream introduction pipeline is provided with the eleventh valve 90. A draw-off pipeline for the dried regenerated gas stream is arranged between the first drying tower 10 and the regenerated hydrogen stream filter 31, and the draw-off pipeline for the dried regenerated gas stream on the side close to the first drying tower 10 is provided with the fourteenth valve 93. The first drying tower 10 can also communicate with the gas cooler 60, the gas-water separator 70 and the third drying tower 12 through the regenerated gas stream draw-off branch, and then is connected to the regenerated hydrogen stream filter 31 through the draw-off pipeline for the dried regenerated gas stream. That is, the regenerated gas stream draw-off branch is a portion of the draw-off pipeline for the dried regenerated gas stream, and the side of the regenerated gas stream draw-off branch close to the third drying tower 12 is provided with the sixteenth valve 95. After the crude hydrogen stream produced by the hydrogen production system is deoxygenated by the deoxygenator and condensed by the condenser, deoxygenated hydrogen is produced and enters the second drying tower 11 for a molecular sieve adsorption processing. The produced purified hydrogen stream is divided into two portions, where a portion of hydrogen (80%) enters the primary pipeline hydrogen filter 21 and then enters the hydrogen storage tank 50; and the other portion of hydrogen (20%) used as the regenerated hydrogen stream first enters the first drying tower 10 for desorption of the molecular sieve in the first drying tower 10 and then passes through the gas cooler 60 and the gas-water separator 70 to enter the third drying tower 12 for absorption of the water in the regenerated hydrogen stream, and the hydrogen adsorbed by the third drying tower 12 enters the regenerated hydrogen stream filter 31 and then is merged into the product header pipeline 40 to enter the hydrogen storage tank 50.

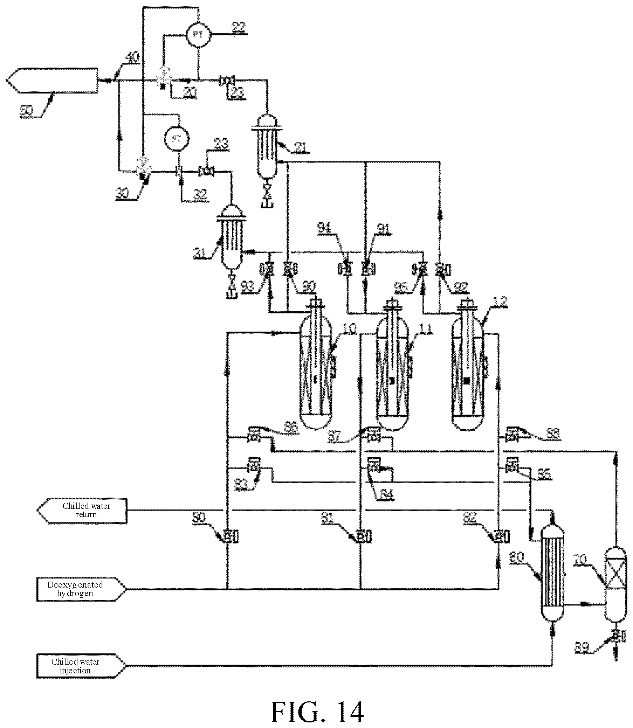

As shown in FIG. 14, in the third operating phase, the first drying tower 10 is used as the supplemental working drying tower, the second drying tower 11 is used as the regeneration drying tower, and the third drying tower 12 is used as the primary working drying tower.

The third drying tower 12 is directly connected to the primary pipeline hydrogen filter 21 through the product draw-off pipeline, and the product draw-off pipeline between the third drying tower 12 and the primary pipeline hydrogen filter 21 is provided with the thirteenth valve 92. A regenerated hydrogen stream introduction pipeline communicating with the product draw-off pipeline communicates between the primary pipeline hydrogen filter 21 and the second drying tower 11, and the regenerated hydrogen stream introduction pipeline is provided with the twelfth valve 91. A draw-off pipeline for the dried regenerated gas stream is arranged between the second drying tower 11 and the regenerated hydrogen stream filter 31, and the draw-off pipeline for the dried regenerated gas stream on the side close to the second drying tower 11 is provided with the fifteenth valve 94. The second drying tower 11 can also communicate with the gas cooler 60, the gas-water separator 70 and the first drying tower 10 through the regenerated gas stream draw-off branch, and then is connected to the regenerated hydrogen stream filter 31 through the draw-off pipeline for the dried regenerated gas stream. That is, the regenerated stream draw-off branch is a portion of the draw-off pipeline for the dried regenerated gas stream, and the side of the regenerated gas stream draw-off branch close to the third drying tower 12 is provided with the fourteenth valve 93. After the crude hydrogen stream produced by the hydrogen production system is deoxygenated by the deoxygenator and condensed by the condenser, deoxygenated hydrogen is produced and enters the third drying tower 12 for a molecular sieve adsorption processing. The produced purified hydrogen stream is divided into two portions, where a portion of hydrogen (80%) enters the primary pipeline hydrogen filter 21 and then enters the hydrogen storage tank 50; and the other portion of hydrogen (20%) used as the regenerated hydrogen stream first enters the second drying tower 11 for desorption of the molecular sieve in the second drying tower 11 and then passes through the gas cooler 60 and the gas-water separator 70 to enter the first drying tower 10 for absorption of the water in the regenerated hydrogen stream, and the hydrogen adsorbed by the first drying tower 10 enters the regenerated hydrogen stream filter 31 and then is merged into the product header pipeline 40 to enter the hydrogen storage tank 50.

The first drying tower 10, the second drying tower 11 and the third drying tower 12 are sequentially used as the primary working drying tower, the supplemental working drying tower and the regeneration drying tower, and the above steps are repeated.

It can be understood that in the first operating phase, the second operating phase and the third operating phase of the system for purifying and drying a hydrogen stream, the flow regulating valve for the regenerated hydrogen stream 30 is always in a turned-on state. The first valve 80 to the sixteenth valve 95 are cut-off valves 23, which can be mechanical valves, electric valves or pneumatic valves, and can control the turning-on and turning-off of corresponding pipelines.

In some embodiments, the flow regulating valve for the regenerated hydrogen stream 30 and the flow monitor 32 are arranged on the regenerated gas stream draw-off branch.

Specifically, the flow regulating valve for the regenerated hydrogen stream 30 and the flow monitor 32 are both arranged on the regenerated gas stream draw-off branch. The flow monitor 32 can acquire the flow rate of the regenerated hydrogen stream on the regenerated gas stream draw-off branch in real time. The controller performs comparative analysis according to the flow rate of the regenerated hydrogen stream produced by the flow monitor 32 and the regenerated hydrogen stream flow rated value preset inside. The controller transmits the control information to the locator of the flow regulating valve for the regenerated hydrogen stream 30 through a wire according to an analysis result, so that the flow regulating valve for the regenerated hydrogen stream 30 performs a corresponding operation.

In some embodiments, the pressure monitor 22 is arranged on the regenerated gas stream draw-off branch.

Specifically, the pressure monitor 22 is arranged on the regenerated gas stream draw-off branch. The pressure monitor 22 acquires the pressure value information of the system for purifying and drying a hydrogen stream in real time, and the pressure value information is transmitted to the controller through a wire. The controller performs comparative analysis according to the pressure value information of the system for purifying and drying a hydrogen stream produced by the pressure monitor 22 and the pressure rated value of the system for purifying and drying a hydrogen stream preset inside. The controller transmits the control information to the locator of the product regulating valve 20 through a wire according to an analysis result, so that the product regulating valve 20 performs a corresponding operation, and an opening degree of the product regulating valve 20 is determined.

In some embodiments, the flow regulating valve for the regenerated hydrogen stream 30 and the flow monitor 32 are both arranged on the regenerated gas stream draw-off branch, the pressure monitor 22 is arranged on the draw-off pipeline for the product gas stream, and the flow regulating valve for the regenerated hydrogen stream 30 is electrically connected to the flow monitor 32 and the pressure monitor 22 respectively.

Specifically, the regenerated gas stream draw-off branch is provided with a flow regulating valve for the regenerated hydrogen stream 30 and a flow monitor 32, and the flow monitor 32 is electrically connected to the flow regulating valve for the regenerated hydrogen stream 30 through a controller. The draw-off pipeline for the product gas stream is provided with a product regulating valve 20 and a pressure monitor 22, and the pressure monitor 22 is electrically connected to the flow regulating valve for the regenerated hydrogen stream 30 and the product regulating valve 20 through the controller. The flow regulating valve for the regenerated hydrogen stream 30 on the regenerated gas stream draw-off branch is electrically connected to both the flow monitor 32 and the pressure monitor 22. When the operating load of the system for purifying and drying a hydrogen stream is greater than the load threshold (such as 20%), the product regulating valve 20 determines the opening degree of the product regulating valve 20 based on the pressure rated value of the system for purifying and drying a hydrogen stream, and the flow regulating valve for the regenerated hydrogen stream 30 determines the opening degree of the flow regulating valve for the regenerated hydrogen stream 30 based on the regenerated hydrogen stream flow rated value; otherwise, the product regulating valve 20 is in a turned-off state, so that the flow regulating valve for the regenerated hydrogen stream 30 is controlled by pressure but not controlled by flow.

In some embodiments, the draw-off pipeline for the dried regenerated gas stream and/or the draw-off pipeline for the product gas stream are provided with cut-off valves 23.

Specifically, as shown in FIG. 12 to FIG. 14, the draw-off pipeline for the dried regenerated gas stream between the flow regulating valve for the regenerated hydrogen stream 30 and the regenerated hydrogen stream filter 31 is provided with a cut-off valve 23, and/or the draw-off pipeline for the product gas stream between the product regulating valve 20 and the product hydrogen stream filter is provided with a cut-off valve 23. By the coordination of the cut-off valves 23 on the draw-off pipeline for the dried regenerated gas stream and the draw-off pipeline for the product gas stream, when the system for purifying and drying a hydrogen stream stops operating, a stable pressure is formed inside the system for purifying and drying a hydrogen stream, so that when the system for purifying and drying a hydrogen stream is started again, the system can quickly enter an operating state.

In some embodiments, the flow regulating valve for the regenerated hydrogen stream 30 is a ball valve; and the cut-off valve 23 is a stop valve.

Specifically, the flow regulating valve for the regenerated hydrogen stream 30 and the product regulating valve 20 are both ball valves, and the opening degree of the flow regulating valve for the regenerated hydrogen stream 30 and the opening degree of the product regulating valve 20 can be controlled. The cut-off valve 23 is a stop valve, which can control the turning-on and turning-off of the draw-off pipeline for the product gas stream and the draw-off pipeline for the dried regenerated gas stream.

It can be understood that in the first operating phase, the second operating phase and the third operating phase of the system for purifying and drying a hydrogen stream, the cut-off valves 23 on the draw-off pipeline for the dried regenerated gas stream and/or the draw-off pipeline for the product gas stream are always in an open state.

A second aspect of the present application provides a hydrogen production system, including the system for purifying and drying a hydrogen stream according to any embodiment of the present application.

The specific technical features and effects of the hydrogen production system are consistent with those of the system for purifying and drying a hydrogen stream, and will not be repeated in the present application.

The preferred embodiments of the present application are described in detail above. However, the present application is not limited to the specific details in the above embodiments, a plurality of simple deformations can be made to the technical solution of the present application within a range of the technical concept of the present application, and these simple deformations fall within the protection scope of the present application.

In addition, it should be noted that the specific technical features described in the above specific embodiments can be combined in any proper manner in a case without conflict. To avoid unnecessary repetition, various possible combination manners are not described in the present application.

In addition, different embodiments of the present application can also be arbitrarily combined without departing from the idea of the present application, and these combinations shall still be regarded as the content disclosed in the present application.

**Claims**

1. A method for purifying and drying a hydrogen stream, comprising a drying phase, a regeneration phase and a supplemental drying phase that are sequentially performed, wherein

the drying phase comprises: introducing a crude hydrogen stream produced by a hydrogen production system into a primary working drying tower for a first adsorption processing to produce a purified hydrogen stream;
the regeneration phase comprises: dividing the purified hydrogen stream from the primary working drying tower into two portions; directing a first portion of the purified hydrogen stream as a product hydrogen stream through a draw-off pipeline for the product gas stream; and introducing a second portion of the purified hydrogen stream into a regeneration drying tower to regenerate an adsorbent thereof to produce a regenerated hydrogen stream and a regenerated adsorbent; and

the supplemental drying phase comprises: introducing the regenerated hydrogen stream into a supplemental working drying tower for a second adsorption processing to produce a dried regenerated hydrogen stream; directing the dried regenerated hydrogen stream through a draw-off pipeline for the dried regenerated gas stream, and monitoring a draw-off flow rate of the dried regenerated hydrogen stream; and increasing an opening degree of a flow regulating valve for the regenerated hydrogen stream on the draw-off pipeline for the dried regenerated gas stream or reducing an opening degree of a flow regulating valve for the regenerated hydrogen stream on the draw-off pipeline for the product gas stream when the draw-off flow rate of the dried regenerated hydrogen stream is less than a threshold, so as to increase a flow rate of the regenerated hydrogen stream introduced into the regeneration drying tower, wherein the draw-off pipeline for the product gas stream and the draw-off pipeline for the regenerated gas stream converge to form a product header pipeline.

2. The method according to claim 1, wherein the monitoring a draw-off flow rate of the dried regenerated hydrogen stream is performed by either:

manner 1: the draw-off pipeline for the regenerated gas stream is provided with a flow regulating valve for the regenerated hydrogen stream and a flow monitor, and the flow regulating valve for the regenerated hydrogen stream and the flow monitor are coupled with a controller via signal connection; or
manner 2: the draw-off pipeline for the regenerated gas stream is provided with a flow monitor, the draw-off pipeline for the product gas stream is provided with a flow regulating valve for the regenerated hydrogen stream, and the flow regulating valve for the regenerated hydrogen stream and the flow monitor are coupled with a controller via signal connection.

3. The method according to claim 2, wherein a draw-off flow threshold of the dried regenerated hydrogen stream is $L_1$, the $L_1$ is set according to a rated flow rate of the purified hydrogen stream from the primary working drying tower during an operation of the hydrogen production system at a rated power, and in the manner 1 or the manner 2, the flow regulating valve for the regenerated hydrogen stream is regulated to maintain the flow rate of the regenerated hydrogen stream introduced into the regeneration drying tower at 80-120% of the $L_1$; and
optionally, during the operation of the hydrogen production system at the rated power, a total flow rate of the purified hydrogen stream from the primary working drying tower is L, and the $L_1$ is set to 10-20% of the L.

4. The method according to claim 2, wherein the draw-off pipeline for the product gas stream and/or the draw-off pipeline for the regenerated gas stream is provided with at least one pressure monitor; and
the supplemental working phase further comprises: acquiring a pressure value of a system for purifying and drying a hydrogen stream in real time, and determining an opening degree of the flow regulating valve for the regenerated hydrogen stream according to a pressure rated value of the system for purifying and drying a hydrogen stream and the pressure value of the system for purifying and drying a hydrogen stream acquired in real time, so as to enable the pressure value of the system for purifying and drying a hydrogen stream acquired in real time to reach the pressure rated value of the system for purifying and drying a hydrogen stream.

5. The method according to claim 4, wherein the determining an opening degree of the flow regulating valve for the regenerated hydrogen stream according to a pressure rated value of the system for purifying and drying a hydrogen stream and the pressure value of the system for purifying and drying a hydrogen stream acquired in real time comprises:

determining, by the flow regulating valve for the regenerated hydrogen stream, the opening degree of the flow regulating valve for the regenerated hydrogen stream based on a regenerated hydrogen stream flow rated value when an operating load of the system for purifying and drying a hydrogen stream is greater than a load threshold; and
determining, by the flow regulating valve for the regenerated hydrogen stream, the opening degree of the flow regulating valve for the regenerated hydrogen stream based on the pressure rated value of the system for purifying and drying a hydrogen stream when the operating load of the system for purifying and drying a hydrogen stream is less than or equal to the load threshold.

6. The method according to claim 1, wherein the regeneration drying tower in the regeneration phase performs a regeneration processing under heating conditions;

> optionally, a heating manner in the regeneration phase comprises: heating the second portion of the purified hydrogen stream inside the regeneration drying tower, or heating the second portion of the purified hydrogen stream outside the regeneration drying tower;
> optionally, the heating the second portion of the purified hydrogen stream outside the regeneration drying tower comprises: first introducing the second portion of the purified hydrogen stream into an external heating apparatus for heating, and then introducing the heated second portion of the purified hydrogen stream into the regeneration drying tower; and
> preferably, the external heating apparatus comprises a first heating tower and a second heating tower, and the first heating tower and the second heating tower are used in series or used in parallel.

7. The method according to claim 6, wherein a first drying tower, a second drying tower and a third drying tower are used; when one of the drying towers is used as the primary working drying tower, the other two drying towers are respectively used as the regeneration drying tower and the supplemental working drying tower; and the method comprises:

> using the first drying tower as the primary working drying tower, using the second drying tower as the regeneration drying tower, and using the third drying tower as the supplemental working drying tower;
> when a first preset switching condition is met, switching the second drying tower as the primary working drying tower, switching the third drying tower as the regeneration drying tower, and switching the first drying tower as the supplemental working drying tower;
> when a second preset switching condition is met, switching the third drying tower as the primary working drying tower, switching the first drying tower as the regeneration drying tower, and switching the second drying tower as the supplemental working drying tower; and
> when a third preset switching condition is met, switching the first drying tower as the primary working drying tower, switching the second drying tower as the regeneration drying tower, and switching the third drying tower as the supplemental working drying tower.

8. The method according to claim 7, wherein a fourth drying tower is further comprised; and when any of the three drying towers in operation is switched out, the fourth drying tower is switched in to replace the drying tower to be switched out.

9. The method according to claim 8, wherein the first drying tower, the second drying tower, the third drying tower and the fourth drying tower are used; and in the regeneration phase, the second portion of the purified hydrogen stream from the primary working drying tower is heated inside the regeneration drying tower or heated outside the regeneration drying tower.

10. The method according to claim 1, wherein the primary working drying tower is connected to a working cooling and separating unit for cooling and separating the gas stream before being introduced into the primary working drying tower; the regeneration drying tower is connected to a regeneration cooling and separating unit for cooling and separating the regenerated hydrogen stream; the supplemental working drying tower is connected to a supplemental working cooling and separating unit for cooling and separating the gas stream introduced into the supplemental working drying tower; and the method further comprises:

> heating a crude hydrogen stream by a pre-heater, then introducing the same into a deoxygenation apparatus for a deoxygenation processing to produce a deoxygenated electrolytic hydrogen stream, and introducing the deoxygenated electrolytic hydrogen stream into a first cooling and separating unit for cooling and separating to produce a first gas phase and a first liquid phase; introducing the first gas phase into the working cooling and separating unit for cooling and separating to produce a working cooling gas phase and a working cooling liquid phase; introducing the working cooling gas phase into the primary working drying tower for processing to produce the purified hydrogen stream;
> introducing the regenerated hydrogen stream from the regeneration drying tower into the regeneration cooling and separating unit for cooling and separating to produce a regenerated hydrogen separated gas phase and a regenerated hydrogen stream separated liquid phase; introducing the regenerated hydrogen separated gas phase from the regeneration cooling and separating unit into the supplemental working cooling and separating unit for separating and cooling to produce a supplemental regenerated gas phase and a supplemental regenerated liquid phase; and introducing the supplemental regenerated gas phase into the supplemental working drying tower for processing to produce the dried regenerated hydrogen stream.

**11.** The method according to claim 1, wherein the regeneration drying tower is connected to a regeneration cooling and separating unit for cooling and separating the regenerated hydrogen stream; and the method further comprises:

heating a crude hydrogen stream by a pre-heater, then introducing the same into a deoxygenation apparatus for a deoxygenation processing to produce a deoxygenated electrolytic hydrogen stream, and introducing the deoxygenated electrolytic hydrogen stream into a first cooling and separating unit for cooling and separating to produce a first gas phase and a first liquid phase;

introducing the first gas phase into the primary working drying tower for processing to produce the purified hydrogen stream;

introducing the regenerated hydrogen stream from the regeneration drying tower into the regeneration cooling and separating unit for cooling and separating to produce a regenerated hydrogen separated gas phase and a regenerated hydrogen stream separated liquid phase; and

introducing the regenerated hydrogen separated gas phase into the supplemental working drying tower for processing to produce the dried regenerated hydrogen stream.

**12.** A system for purifying and drying a hydrogen stream, wherein the system comprises a primary working drying tower, a regeneration drying tower and a supplemental working drying tower, and the system is configured to have a drying working condition, a regeneration working condition and a supplemental working condition that are sequentially operated;

the drying working condition is configured to introduce a crude hydrogen stream produced by a hydrogen production system into the primary working drying tower for an adsorption processing to produce a purified hydrogen stream;

the regeneration working condition is configured to divide the purified hydrogen stream from the primary working drying tower into two portions; direct a first portion of the purified hydrogen stream as a product hydrogen stream through a draw-off pipeline for the product gas stream; and introduce a second portion of the purified hydrogen stream into the regeneration drying tower to regenerate an adsorbent thereof to produce a regenerated hydrogen stream and a regenerated adsorbent; and

the supplemental working condition is configured to introduce the regenerated hydrogen stream into the supplemental working drying tower for a second adsorption processing to produce a dried regenerated hydrogen stream;

direct the dried regenerated hydrogen stream through a draw-off pipeline for the regenerated gas stream, and monitor a draw-off flow rate of the dried regenerated hydrogen stream; and increase an opening degree of a flow regulating valve for the regenerated hydrogen stream on the draw-off pipeline for the regenerated gas stream or reduce an opening degree of a flow regulating valve for the regenerated hydrogen stream on the draw-off pipeline for the product gas stream when the draw-off flow rate of the dried regenerated hydrogen stream is less than a threshold, so as to increase a flow rate of the regenerated hydrogen stream introduced into the regeneration drying tower, wherein the draw-off pipeline of the product gas stream and the draw-off pipeline for the regenerated gas stream converge to form a product header pipeline.

**13.** A system for purifying and drying a hydrogen stream, wherein the system comprises a first drying tower, a second drying tower and a third drying tower; the system configures the first drying tower, the second drying tower and the third drying tower to be sequentially recycled as a primary working drying tower, a regeneration drying tower and a supplemental working drying tower in a drying working condition, a regeneration working condition and a supplemental working condition;

the primary working drying tower is configured to perform an adsorption processing on a crude hydrogen stream produced by a hydrogen production system to produce a purified hydrogen stream;

the system comprises a draw-off pipeline for the product gas stream, configured to direct a first portion of the purified hydrogen stream from the primary working drying tower;

the regeneration drying tower is configured to introduce a second portion of the purified hydrogen stream into the regeneration drying tower to regenerate an adsorbent thereof to produce a regenerated hydrogen stream and a regenerated adsorbent;

the supplemental working drying tower is configured to perform a second adsorption processing on the regenerated hydrogen stream to produce a dried regenerated hydrogen stream;

the system comprises a draw-off pipeline for the regenerated gas stream, configured to direct the regenerated hydrogen stream from the supplemental working drying tower;

the system comprises a product header pipeline, formed by convergence of the draw-off pipeline for the product gas stream and the draw-off pipeline for the regenerated gas stream; and

the system comprises a flow regulating valve for the regenerated hydrogen stream and a flow monitor, and the flow regulating valve for the regenerated hydrogen stream and the flow monitor are coupled with a controller via signal connection, wherein the flow regulating valve for the regenerated hydrogen stream and the flow monitor are arranged on the draw-off pipeline for the regenerated gas stream; or

the flow monitor is arranged on the draw-off pipeline for the regenerated gas stream, and the flow regulating valve for the regenerated hydrogen stream is arranged on the draw-off pipeline for the product gas stream.

14. The system according to claim 12 or 13, wherein the draw-off pipeline for the product gas stream is provided with a pressure monitor and a regulating valve for the product hydrogen stream, and the pressure monitor and the regulating valve for the product hydrogen stream are coupled with a controller via signal connection; an opening degree of the regulating valve for the product hydrogen stream is configured to be set according to a rated pressure of the system;

preferably, when the flow regulating valve for the regenerated hydrogen stream is arranged on the draw-off pipeline for the product gas stream, the flow regulating valve for the regenerated hydrogen stream is arranged on an upstream side of the regulating valve for the product hydrogen stream to enable the product hydrogen stream from the primary working drying tower to flow out sequentially through the flow regulating valve for the regenerated hydrogen stream, the pressure monitor and the regulating valve for the product hydrogen stream; and

optionally, the regulating valve for the product hydrogen stream is selected from one of a film pneumatic regulating valve or a self-operated pressure regulating valve.

15. The system for purifying and drying a hydrogen stream according to claim 12 or 13, wherein the system for purifying and drying a hydrogen stream further comprises:

a regenerated gas stream introduction pipeline, configured to introduce a second portion of the purified hydrogen stream into the regeneration drying tower;

the draw-off pipeline for the product gas stream and/or the draw-off pipeline for the regenerated gas stream is provided with at least one pressure monitor; and

one of the regenerated gas stream introduction pipeline, the draw-off pipeline for the regenerated gas stream and the draw-off pipeline for the product gas stream is respectively provided with a flow regulating valve for the regenerated hydrogen stream and a flow monitor, the flow regulating valve for the regenerated hydrogen stream is electrically connected to the flow monitor, and the flow regulating valve for the regenerated hydrogen stream is electrically connected to the at least one pressure monitor.

16. The system for purifying and drying a hydrogen stream according to claim 15, wherein the flow regulating valve for the regenerated hydrogen stream and the flow monitor are arranged on the draw-off pipeline for the regenerated gas stream.

17. The system for purifying and drying a hydrogen stream according to claim 15, wherein the pressure monitor is arranged on the draw-off pipeline for the regenerated gas stream.

18. The system for purifying and drying a hydrogen stream according to claim 15, wherein the flow regulating valve for the regenerated hydrogen stream and the flow monitor are both arranged on the draw-off pipeline for the regenerated gas stream, the pressure monitor is arranged on the draw-off pipeline for the product gas stream, and the flow regulating valve for the regenerated hydrogen stream is electrically connected to the flow monitor and the pressure monitor respectively.

19. The system according to claim 12 or 13, wherein the system further comprises an external heating apparatus, configured to heat the regenerated hydrogen stream before being introduced into the regeneration drying tower; and

preferably, the external heating apparatus comprises a first heating tower and a second heating tower, the first heating tower and the second heating tower being used in series or used in parallel.

20. The system according to claim 12 or 13, wherein the system further comprises a fourth drying tower, the fourth drying tower being configured such that: when any of the three drying towers in operation is switched out, the fourth drying tower is switched in to replace the drying tower to be switched out.

21. The system according to claim 20, wherein the system further comprises a deoxygenation apparatus, the deoxygenation apparatus being configured to perform a deoxygenation processing on a crude hydrogen stream to produce a deoxygenated crude hydrogen stream, and a deoxygenated crude hydrogen stream outlet of the deoxygenation apparatus communicating with an inlet of the primary working drying tower;
preferably, the system further comprises a first cooling and separating unit, the first cooling and separating unit being configured to perform a first cooling processing and a first separation processing on the deoxygenated crude hydrogen stream from the deoxygenation apparatus to produce a first gas phase and a first liquid phase, and a first gas phase outlet of the first cooling and separating unit communicating with the inlet of the primary working drying tower.

22. The system according to claim 20, wherein the system further comprises a working cooling and separating unit, a regeneration cooling and separating unit and a supplemental working cooling and separating unit, the working cooling and separating unit being configured to cool and separate the stream before being introduced into the primary working drying tower, the regeneration cooling and separating unit being configured to cool and separate the regenerated hydrogen stream produced from the regeneration drying tower, and the supplemental working cooling and separating unit being configured to cool and separate the stream before being introduced into the supplemental working drying tower;
or the system further comprises a regeneration cooling and separating unit, the regeneration cooling and separating unit being configured to cool and separate the regenerated hydrogen stream produced from the regeneration drying tower.

FIG. 1

FIG. 2a

FIG. 2b

FIG. 2c

FIG. 2d

FIG. 3

First
heating
tower

Second
heating
tower

FIG. 4

First
heating
tower

Second
heating
tower

FIG. 5a

## FIG. 5b

Heating inside drying tower

## FIG. 6

Heating inside drying tower

FIG. 7

Heating inside drying tower

Standby

FIG. 8

Heating outside drying tower

FIG. 9

FIG. 10a

FIG. 10b

FIG. 11a

FIG. 11b

FIG. 12

FIG. 13

FIG. 14

## FIG. 15

PT 22

40

50

20
PC

23

32
FT

23

30
PC

21

PT

31

## FIG. 15

Control process of regulating valve
for regenerated hydrogen stream

>20%

Regulate a flow of a
regulating valve for
regenerated hydrogen stream,
and determine according to a
flow rated value

A system
automatically
regulates a
regenerated gas flow
$F_{E1} \to F_E$

The system
operates
under the
condition of an
$F_{E1}$ value

$F_{E1}$: actually measured flow; $F_E$: flow rated value of
regenerated hydrogen

Detect a
purification
Operating
load

$P_{E1}$: actually measured pressure; $P_E$: pressure rated value

≤20%

Regulate a pressure of a
regulating valve for
regenerated hydrogen
stream, and determine
according to a set pressure

A system
automatically
regulates a
purification system
pressure $P_{E1} \to P_E$

The system
operates
under the
condition of a
$P_{E1}$ value

Start
operation

Control process of primary pipeline
regulating valve

>20%

Regulate a pressure of
a primary pipeline
regulating valve, and
determine according to
a set pressure

A system
automatically
regulates a
purification system
pressure $P_{E1} \to P_E$

The system
operates
under the
condition of a
$P_{E1}$ value

$P_{E1}$: actually measured pressure; $P_E$: pressure rated value

Detect a
purification
operating
load

≤20%

Turn off a
primary pipeline
regulating valve

## FIG. 16

## INTERNATIONAL SEARCH REPORT

| International application No. |
|---|
| **PCT/CN2024/080824** |

### A. CLASSIFICATION OF SUBJECT MATTER

C01B 3/56(2006.01)i; C01B 3/50(2006.01)i

According to International Patent Classification (IPC) or to both national classification and IPC

### B. FIELDS SEARCHED

Minimum documentation searched (classification system followed by classification symbols)

IPC: C01B 3/5-

Documentation searched other than minimum documentation to the extent that such documents are included in the fields searched

Electronic data base consulted during the international search (name of data base and, where practicable, search terms used)

CNTXT, VEN, CNKI, WEB OF SCIENCE: 氢, H2, 吸附, 再生, 波动, 稳定, 阀, 流量, 调节, 调整, 阈值, 设定值, 开度, hydrogen, adsorb, adsorption, regenerate, regeneration, fluctuate, stablize, valve, adjust, flow, threshold, set value, opening

### C. DOCUMENTS CONSIDERED TO BE RELEVANT

| Category* | Citation of document, with indication, where appropriate, of the relevant passages | Relevant to claim No. |
|---|---|---|
| PX | CN 116216642 A (WUXI LONGJI HYDROGEN ENERGY TECHNOLOGY CO., LTD.) 06 June 2023 (2023-06-06) claims 1-15 | 1-22 |
| Y | CN 115650171 A (WUXI LONGJI HYDROGEN ENERGY TECHNOLOGY CO., LTD.) 31 January 2023 (2023-01-31) description, paragraphs [0006]-[0081] | 1-22 |
| Y | CN 101102830 A (TEXACO DEVELOPMENT CORP.) 09 January 2008 (2008-01-09) description, page 2, last paragraph-page 3, paragraph 1, and page 3, last paragraph-page 20, paragraph 2 | 1-22 |
| Y | CN 1920100 A (SUZHOU JINGLI HYDROGEN-MAKING EQUIPMENT CO., LTD.) 28 February 2007 (2007-02-28) description, page 2, paragraph 2-page 3, paragraph 4 | 1-22 |
| A | CN 87105154 A (UNION CARBIDE CORP.) 03 February 1988 (1988-02-03) entire document | 1-22 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 June 2024** | **21 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/080824** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 111675194 A (COCKERILL JINGLI (SUZHOU) HYDROGEN TECHNOLOGY CO., LTD.) 18 September 2020 (2020-09-18)<br>entire document | 1-22 |
| A | CN 115259087 A (GUANGXI LIUZHOU IRON AND STEEL GROUP CO., LTD.) 01 November 2022 (2022-11-01)<br>entire document | 1-22 |
| A | CN 215946756 U (XIAMEN SHENGHONG MACHINERY EQUIPMENT CO., LTD.) 04 March 2022 (2022-03-04)<br>entire document | 1-22 |
| A | CN 202297109 U (SUZHOU SUJING PROTECTIVE ATMOSPHERE CO., LTD.) 04 July 2012 (2012-07-04)<br>entire document | 1-22 |
| A | US 6471744 B1 (SEQUAL TECHNOLOGIES INC.) 29 October 2002 (2002-10-29)<br>entire document | 1-22 |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 116216642 | A | 06 June 2023 | None | | | |
| CN | 115650171 | A | 31 January 2023 | None | | | |
| CN | 101102830 | A | 09 January 2008 | JP | 2008524106 | A | 10 July 2008 |
| | | | | WO | 2006065673 | A2 | 22 June 2006 |
| | | | | WO | 2006065673 | A3 | 14 September 2006 |
| | | | | AU | 2005316726 | A1 | 22 June 2006 |
| | | | | US | 2006130402 | A1 | 22 June 2006 |
| | | | | US | 7354463 | B2 | 08 April 2008 |
| | | | | EP | 1835978 | A2 | 26 September 2007 |
| | | | | EP | 1835978 | A4 | 20 May 2009 |
| | | | | CA | 2590712 | A1 | 22 June 2006 |
| CN | 1920100 | A | 28 February 2007 | None | | | |
| CN | 87105154 | A | 03 February 1988 | EP | 0254567 | A2 | 27 January 1988 |
| | | | | EP | 0254567 | A3 | 01 June 1988 |
| | | | | EP | 0254567 | B1 | 14 March 1990 |
| | | | | BR | 8703326 | A | 15 March 1988 |
| | | | | JPS | 6388015 | A | 19 April 1988 |
| | | | | JPH | 0239929 | B2 | 07 September 1990 |
| | | | | KR | 880002059 | A | 28 April 1988 |
| | | | | KR | 930000532 | B1 | 25 January 1993 |
| | | | | GR | 890300189 | T1 | 31 October 1990 |
| | | | | CA | 1301668 | C | 26 May 1992 |
| | | | | DE | 3761874 | D1 | 19 April 1990 |
| | | | | US | 4693730 | A | 15 September 1987 |
| | | | | ES | 2013761 | B3 | 01 June 1990 |
| | | | | IN | 171193 | B | 15 August 1992 |
| | | | | ATE | 50921 | T1 | 15 March 1990 |
| | | | | GR | 3000471 | T3 | 28 June 1991 |
| CN | 111675194 | A | 18 September 2020 | None | | | |
| CN | 115259087 | A | 01 November 2022 | None | | | |
| CN | 215946756 | U | 04 March 2022 | None | | | |
| CN | 202297109 | U | 04 July 2012 | None | | | |
| US | 6471744 | B1 | 29 October 2002 | WO | 03015899 | A1 | 27 February 2003 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310226795

- CN 202420289865